# EUROPÄISCHE PATENTANMELDUNG

(11) **EP 4 349 148 A1**
(43) Veröffentlichungstag der Anmeldung: **10.04.2024**
(21) Anmeldenummer: 23195118.7
(22) Anmeldetag: 04.09.2023
(51) Int. Cl.: A01C 7/08, A01C 7/10

(54) **PNEUMATISCHE VERTEILMASCHINE UND VERFAHREN ZUR REGELUNG DES MASSENSTROMS IHRES DOSIERORGANS**

(30) Priorität: 06.10.2022 DE 102022125776
(71) Anmelder: RAUCH Landmaschinenfabrik GmbH, 77836 Rheinmünster (DE)
(72) Erfinder: Stöcklin, Volker, 77975 Ringsheim (DE); Klein, Frederic, 67000 Straßburg (FR); Schäfer, Fabian, 76473 Iffezheim (DE)
(74) Vertreter: Lichti - Patentanwälte Partnerschaft mbB

(57) **Zusammenfassung**

Es wird ein Verfahren zur Regelung des Massenstromes an Verteilgut der Dosierorgane (17) einer pneumatischen Verteilmaschine vorgeschlagen. Hierbei wird einer Regeleinrichtung einerseits ein Soll-Massenstrom an Verteilgut als Führungsgröße eingegeben oder von dieser ermittelt, andererseits wird als Regelgröße das für den Ist-Massenstrom an Verteilgut repräsentative Drehmoment eines Rotors (21) in dem pneumatischen Fördersystem der Verteilmaschine sensorisch ermittelt, an die Regeleinrichtung übermittelt und hieraus der Ist-Massenstrom an Verteilgut anhand eines in der Regeleinrichtung hinterlegten funktionalen Zusammenhangs zwischen dem Drehmoment des Rotors und dem auf diesen auftreffenden Massenstrom an Verteilgut ermittelt. Daraufhin wird die Abweichung des Ist-Massenstromes von dem Soll-Massenstrom an Verteilgut ermittelt und eine für den Betriebszustand des Dosierorgans repräsentative Stellgröße generiert, um das Dosierorgan auf den Soll-Massenstrom nachzuregeln. Die Erfindung betrifft ferner eine zur Durchführung eines solchen Verfahrens geeignete pneumatische Verteilmaschine.

## Beschreibung

Die Erfindung betrifft ein Verfahren zur Regelung des Massenstromes an Verteilgut wenigstens eines regelbaren Dosierorgans einer pneumatischen Verteilmaschine, umfassend:
- wenigstens einen Vorratsbehälter zur Aufnahme von Verteilgut mit wenigstens einer Auslassöffnung;
- wenigstens ein der Auslassöffnung des Vorratsbehälters nachgeordnetes Dosierorgan;
- eine mit dem Dosierorgan in Verbindung stehende Regeleinrichtung, welche zur Regelung des Dosierorgans auf einen Soll-Massenstrom an Verteilgut in Abhängigkeit wenigstens eines Parameters aus der Gruppe Soll-Verteilmenge pro Flächeneinheit, Fahrgeschwindigkeit und Arbeitsbreite ausgebildet ist;
- wenigstens eine dem Dosierorgan nachgeordnete Übergabekammer zur Überführung von mittels des Dosierorgans dosiertem Verteilgut an wenigstens eine Förderleitung eines pneumatischen Fördersystems, welches zur Überführung des dosierten Verteilgutes an wenigstens ein Verteilorgan ausgebildet ist;
- wenigstens ein Gebläse zur Beaufschlagung der wenigstens einen Förderleitung des pneumatischen Fördersystems mit einem Luftstrom; und
- wenigstens einen in dem pneumatischen Fördersystem angeordneten Rotor, welcher mittels eines gesteuerten
und/oder geregelten Rotorantriebs drehangetrieben ist, wobei ein Soll-Massenstrom an Verteilgut der Regeleinrichtung als Führungsgröße eingegeben und/oder von dieser ermittelt wird, um das Dosierorgan auf den Soll-Massenstrom zu regeln.

Die Erfindung bezieht sich ferner auf eine insbesondere zur Durchführung eines solchen Verfahrens geeignete pneumatische Verteilmaschine, insbesondere aus der Gruppe pneumatischer Düngerstreuer, pneumatische Sämaschine und Drillmaschine, umfassend:
- wenigstens einen Vorratsbehälter zur Aufnahme von Verteilgut mit wenigstens einer Auslassöffnung;
- wenigstens ein der Auslassöffnung des Vorratsbehälters nachgeordnetes Dosierorgan;
- eine mit dem Dosierorgan in Verbindung stehende Regeleinrichtung, welche zur Regelung des Dosierorgans auf einen Soll-Massenstrom an Verteilgut in Abhängigkeit wenigstens eines Parameters aus der Gruppe Soll-Verteilmenge pro Flächeneinheit, Fahrgeschwindigkeit und Arbeitsbreite ausgebildet ist;
- wenigstens eine dem Dosierorgan nachgeordnete Übergabekammer zur Überführung von mittels des Dosierorgans dosiertem Verteilgut an wenigstens eine Förderleitung eines pneumatischen Fördersystems, welches zur Überführung des dosierten Verteilgutes an wenigstens ein Verteilorgan ausgebildet ist;
- wenigstens ein Gebläse zur Beaufschlagung der wenigstens einen Förderleitung des pneumatischen Fördersystems mit einem Luftstrom; und
- wenigstens einen in dem pneumatischen Fördersystem angeordneten Rotor, welcher mittels eines gesteuerten und/oder geregelten Rotorantriebs drehangetrieben ist,
wobei die Regeleinrichtung zur Eingabe und/oder Ermittlung eines Soll-Massenstromes an Verteilgut als Führungsgröße ausgebildet ist, um das Dosierorgan auf den Soll-Massenstrom zu regeln.

Pneumatische Verteilmaschinen finden insbesondere in der Landwirtschaft zum Ausbringen von pulver- und/oder partikelförmigem Verteilgut, wie Saatgut und/oder Dünger, verbreitet Verwendung, wie z.B. in Form von pneumatischen Sämaschinen, Drillmaschinen und pneumatischen Düngerstreuern, sogenannten Gebläsestreuern. Solche Verteilmaschinen existieren einerseits in leichter Bauart als Anbaugeräte, welche mit dem Dreipunkt einer Zugmaschine, wie eines Traktors, gekoppelt werden können; andererseits können sie in schwerer Bauart auf einen achsgestützten Nachläufer oder einen Selbstfahrer aufgesetzt sein. Sie umfassen häufig eine Mehrzahl an seitlich nach außen ragenden Auslegern, welche in unterschiedlichem Abstand voneinander endende Förder- bzw. Verteilerleitungen aufnehmen. Letztere enden an je einem Verteilorgan, welche je nach gewünschter Arbeitsbreite mit unterschiedlichem Seitenabstand von der Verteilmaschine an einem jeweiligen Ausleger angeordnet sind. Zur Überführung des Verteilgutes an die Verteilorgane dient ein Gebläse, welches die erzeugte Förderluft in eine oder insbesondere mehrere Förderleitung(en) eines Fördersystems einspeist, in deren Innern - und in der Regel in einem Leitungsabschnitt derselben unterhalb des Dosierorgans - sich eine Übergabekammer befindet, um den mittels des Dosierorgans dosierten Verteilgutstrom in den in der Förderleitung strömenden Förderluftstrom einzudispergieren und zu fluidisieren. Zu letztgenanntem Zweck ist die (jeweilige) Übergabekammer häufig, wenngleich nicht notwendigerweise, mit einem sogenannten Injektor ausgestattet, welcher eine stromauf der Übergabekammer in der Förderleitung angeordnete Düse und einen stromab der Übergabekammer in der Förderleitung angeordneten Diffusor nach Art einer Expansionsdüse umfasst. Die Übergabekammer ist in diesem Fall folglich zwischen der Düse und dem Diffusor gebildet.

Alternativ kann sich an das bzw. an ein jeweiliges Dosierorgan auch nur eine Förderleitungen anschließen, welche in einen Verteilerkopf führt, von welchem eine Mehrzahl an Verteilerleitungen abgehen, die üblicherweise um den Umfang des Verteilerkopfes verteilt an diesen angeschlossen sind. Die Anschlüsse des Verteilerkopfes sind dabei in der Regel mittels individuell, insbesondere motorisch, betätigbarer Absperrorgane, wie z.B. in Form Absperrklappen, bedarfsweise verschließbar, um einzelne Verteilorgane von der Versorgung mit Verteilgut zu trennen und auf diese Weise insbesondere für eine Teilbreitenschaltung der Verteilmaschine zu sorgen. Das Verteilgut wird schließlich pneumatisch über die nach außen umgelenkten Verteilerleitungen bis zu deren Ende gefördert, wo das Verteilgut auf die Verteilorgane, welche üblicherweise von Prallorganen, wie Prallplatten oder andersartigen Prallkörpern, Injektoren, Säscharen oder dergleichen gebildet sind, auftrifft und von dort im Wesentlichen fächerförmig (im Falle von Prallorganen) oder etwa linienförmig (im Falle von Injektoren oder Säscharen) auf dem Boden abgelegt oder auch in eine in dem Boden erzeugte Furche eingebracht wird.

Darüber hinaus ist es bekannt, dass die Förderleitungen das dosierte Verteilgut nicht unmittelbar an ein jeweiliges Verteilorgan überführen, sondern an eine Mehrzahl an dezentralen, z.B. an Auslegern der pneumatischen Verteilmaschine festgelegten, Behältern, welche z.B. ihrerseits über dezentrale Dosierorgane verfügen, um das Verteilgut von einem jeweiligen dezentralen Behälter an ein Verteilorgan oder an eine Gruppe von Verteilorganen zu überführen (vgl. z.B. die WO 2021/083536 A1).

Zur Dosierung des Verteilgutes, wie beispielsweise im Wesentlichen pulver- und/oder partikelförmigem Saatgut und/oder Dünger oder gegebenenfalls auch anderen, z.B. zum Pflanzenschutz dienenden Granulaten, haben sich insbesondere bei landwirtschaftlichen Verteilmaschinen Dosierorgane bewährt, welche ein drehangetriebenes Dosierrad umfassen, welches in einem Dosiergehäuse mit einem an dessen Oberseite angeordneten Dosiereinlass und einem an dessen Unterseite angeordneten Dosierauslass gelagert ist. Durch Veränderung der Drehgeschwindigkeit des Dosierrades, welches einteilig ausgestaltet sein oder auch zwei oder mehr, unabhängig voneinander oder gemeinsam drehangetriebene Dosierradsegmente aufweisen kann (vgl. z.B. die WO 2018/219489 A1) und üblicherweise in Form von Nocken- und/oder Zellenrädern ausgestaltet ist, lässt sich der dosierte Massenstrom des in den zwischen den Nockenbergen angeordneten Nockentälern des Nockenrades bzw. in den Zellen des Zellenrades angereicherten Verteilgutes auf einfache Weise steuern bzw. regeln. Zu diesem Zweck sind moderne pneumatische Verteilmaschinen zumeist mit einer Steuer- und/oder Regeleinrichtung ausgestattet, welche mit dem bzw. mit den Dosierorgan(en) in Verbindung steht und zur Steuerung und/oder Regelung des bzw. der Dosierorgans/-organe, wie insbesondere der Drehzahl ihres Dosierrades, auf einen Soll-Massenstrom an Verteilgut in Abhängigkeit wenigstens eines Parameters aus der Gruppe Soll-Verteilmenge pro Flächeneinheit, Fahrgeschwindigkeit und Arbeitsbreite dient.

Die IT AN 2013 000030 A1 beschreibt eine pneumatische Verteilmaschine für landwirtschaftliche Zwecke, deren pneumatisches Fördersystem einen Verteilerkopf der oben beschriebenen Art umfasst, in welchen die Förderleitung über ein Steigrohr von unten einmündet und an welchem eine Mehrzahl an Anschlüssen um seinen Umfang verteilt angeordnet sind, an welchen je eine Verteilerleitung angeschlossen ist, welche zu einem jeweiligen Verteilorgan führt. An der dem Steigrohr entgegengesetzten (oberen) Stirnseite des Verteilerkopfes ist ein Rotor drehbar gelagert, welcher dazu dient, das über die Förderleitung zugeführte Verteilgut mit einer Zentrifugalkraft zu beaufschlagen, welche die Wirkung der Schwerkraft verringert und eine homogenere Verteilung des Verteilgutes durch die Anschlüsse des Verteilerkopfes in eine jeweilige Verteilerleitung gewährleistet. Der Rotor kann entweder passiv gelagert und lediglich durch den pneumatischen Förderluftstrom angetrieben sein, oder dem Rotor kann auch ein Rotorantrieb zugeordnet sein, um das Verteilgut unabhängig von dem pneumatischen Förderluftstrom mit einer vorgegebenen Zentrifugalkraft zu beaufschlagen. Eine entsprechende pneumatische Verteilmaschine ist aus der DE 10 2019 128 863 A1 bekannt.

Um das oder die Dosierorgan(e) von pneumatischen Verteilmaschinen auf einen gewünschten Soll-Massenstrom an Verteilgut zu regeln, beschreibt beispielsweise die DE 10 2014 115 020 A1 ein Regelverfahren, bei welchem der Ist-Massenstrom der in den Förderluftstrom eindispergierten Verteilgutpartikel in der Förderleitung mittels eines Durchflusssensors, wie eines Piezosensors, erfasst und an eine Regeleinrichtung der Verteilmaschine übermittelt wird, welche eine Stellgröße in Abhängigkeit des Soll-Massenstroms bestimmt und die Dosierorgane dementsprechend auf den Soll-Massenstrom regelt. Hierbei soll ständig ein Korrekturfaktor als Verhältnis des Ist-Massenstroms in Bezug auf die Ist-Drehzahl bzw. -frequenz des Dosierorgans ermittelt werden, so dass der Soll-Massenstrom mit Hilfe des Korrekturfaktors in eine Soll-Drehzahl bzw. -frequenz des Dosierorgans umgewandelt werden kann. Die Regeleinrichtung ermittelt die auf das Dosierorgan wirkende Stellgröße-- hier: die Drehzahl bzw. -frequenz - in Abhängigkeit von einer Regelabweichung, welche als Differenz zwischen der Soll-Drehzahl und der Ist-Drehzahl bestimmt wird. Indes haben sich derartige Verfahren auf dem Markt bislang nicht durchsetzen können, weil die sensorische Erfassung des Ist-Massenstroms an fluidisierten Verteilgutpartikeln stark fehlerbehaftet und im Übrigen auch störungsanfällig ist, wobei bereits lokale Ablagerungen und/oder Verschmutzungen zu einem Versagen der Massenstromregelung führen können.

Entsprechendes gilt für die DE 100 37 713 A1, welche eine Verteilmaschine in Form einer Drillmaschine beschreibt, die ein Dosierorgan mit einem Dosierrad in Form eines Särades umfasst, welches das dosierte Saatgut in eine unterhalb des Dosierorgans angeordnete Übergabekammer dosiert, an welche sich eine mit einem Luftstrom beaufschlagte Förderleitung anschließt. Stromab des Dosierorgans ist eine in Form einer Lichtschranke, einer Sensoreinheit oder einer Pralleinrichtung ausgebildete Zähleinrichtung vorgesehen, welche eine Teilmenge des auszubringenden Saatgutes abzählt, um die gesamte Aussaatmenge in Abhängigkeit hiervon sowie der Arbeitsgeschwindigkeit zu regeln. Neben den vorgenannten, allgemein mit einer entsprechenden Sensorik verbundenen Nachteilen stellt sich hier ferner das Problem, dass die Zähleinrichtung nur mit einer geringen Teilmenge des zu dosierenden Gesamtmassenstroms an Verteilgut beaufschlagt werden kann, damit die Verteilgutpartikel eine abzählbare Lage bilden können. Aufgrund der üblicherweise nicht linearen Abhängigkeit des dosierten Massenstroms bezogen auf die Drehzahl des Dosierorgans ergeben sich folglich Verteilfehler beim Ausbringen des (gesamten) Soll-Massenstroms an Verteilgut.

In der Praxis bedient man sich daher nach wie vor der Durchführung von sogenannten Abdrehproben, indem das Dosierorgan dadurch kalibriert wird, indem es mit einem bestimmten Verteilguttyp beaufschlagt und über einen vorherbestimmten Probenahmezeitraum mit einem vorherbestimmten Betriebsparameter - üblicherweise der Drehzahl des z.B. als Zellen- oder Nockenrad ausgestalteten Dosierrades - betätigt und die während der Abdrehprobe dosierte Masse an Verteilgut gravimetrisch erfasst wird. Aus der derart erhaltenen Masse an Verteilgut bezogen auf den Probenahmezeitraum und den Betriebsparameter des Dosierorgans kann sodann eine funktionale Beziehung zwischen dem Betriebsparameter des Dosierorgans und dem hiermit dosierten Massenstrom an Verteilgut errechnet und das Dosierorgan anschließend in Abhängigkeit dieser funktionalen Beziehung auf einen Soll-Massenstrom an Verteilgut gesteuert und/oder geregelt werden. Dabei ist es für eine solche Abdrehprobe essentiell, dass das gesamte, während ihrer Durchführung dosierte Verteilgut aufgefangen werden kann und nicht etwa Anteile desselben, z.B. in Bauteilen der Verteilmaschine, zurückbleiben, um für eine hohe Genauigkeit der Einstellung des Dosierorgans beim späteren Arbeitsgang des Düngens/Säens zu sorgen und auch als "Abdrehfehler" bezeichnete Fehldosierungen, insbesondere Überdosierungen, infolge anlässlich der Abdrehprobe nur teilweise aufgefangenen Verteilgutes sowohl aus wirtschaftlichen Gründen als auch aus Umweltschutzgründen zu vermeiden.

Während in vielen Fällen derartige Abdrehproben vor Beginn der Verteilarbeit manuell durchgeführt werden, indem das Dosierorgan in der obigen Weise betätigt und das während der Abdrehprobe dosierte Verteilgut in einem unterhalb des Dosierorgans zu platzierenden Probenahmebehälter aufgefangen wird, wonach der Probenahmebehälter mit der aufgefangenen Masse an Verteilgut manuell gewogen und ein die gewünschte Verteilmenge an Verteilgut pro Dosierzeit identifizierender Kennwert einer Steuereinrichtung der Verteilmaschine eingegeben wird (vgl. z.B. die EP 0 635 195 A1, DE 44 31 288 A1, EP 2 022 308 Al, DE 10 2007 044 178 A1 oder DE 20 2014 009 404 U1), ist eine solche Vorgehensweise einerseits für den Landwirt relativ aufwändig, andererseits lässt die hierdurch erzielte Dosiergenauigkeit oft zu wünschen übrig, weil sich der Ist-Massenstrom desselben Verteilgutes bei gleichbleibender Drehzahl des Dosierorgans während der fortschreitenden Verteilarbeit verändern kann, wie insbesondere infolge von Feuchtigkeit. Überdies bedeutet eine manuelle Eingabe von Werten in die Steuereinrichtung grundsätzlich eine hohe Fehleranfälligkeit.

Es sind daher auch pneumatische Verteilmaschinen bekannt, bei welchen die Abdrehproben einerseits in automatisierter Form, andererseits zu verschiedenen Zeitpunkten während der Verteilarbeit durchgeführt werden können, wie beispielsweise während des Wendens der Verteilmaschine im Vorgewende etc., um die funktionale Beziehung zwischen der Drehzahl des Dosierorgans und dem hiermit dosierten Ist-Massenstrom an Verteilgut stets aktuell zu halten und folglich für eine fortwährend hohe Dosiergenauigkeit zu sorgen. So beschreibt beispielsweise die DE 101 34 991 A1 eine pneumatische Drillmaschine mit einem Saatgutbehälter, einem in Form eines Zellenrades ausgestalteten Dosierorgan sowie einer Zähleinrichtung für die Auszählung der Verteilgutpartikel, welche anlässlich automatisierter Abdrehproben dosiert worden sind. Die Zähleinrichtung ist als pneumatische Zähleinrichtung ausgebildet und umfasst ein Zellenrad mit in dessen Außenbereich mit Abstand voneinander angeordneten Bohrungen, eine die Verteilgutpartikel in die Bohrungen saugende Ansaugeinrichtung und eine Partikelabscheideeinrichtung, welche die angesaugten Partikel aus den Bohrungen abscheidet. Zwei Sensoren, welche jeweils in Drehrichtung des Zellenrades vor und hinter der Partikelabscheideeinrichtung angeordnet sind, dienen zum Zählen der während der Abdrehprobe dosierten Verteilgutpartikel, wobei das Ergebnis dieser Zählung an eine Regeleinrichtung übermittelt wird, welche das Dosierorgan entsprechend der gewünschten Verteilung regelt. Die Zähleinrichtung ist im Innern des Saatgutbehälters angeordnet, wobei in einem zwischen dem Dosierorgan und dem Verteilerkopf angeordneten Abschnitt der Förderleitung eine Weiche vorgesehen ist, welche während der Durchführung einer Abdrehprobe die dosierten Verteilgutpartikel zu der der Zähleinrichtung umleitet, wohingegen sie diese während der Verteilarbeit der in Form eines Verteilerkopfes ausgestalteten Verteileinheit zuleitet. Abgesehen von der in konstruktiver Hinsicht sehr aufwändigen Ausgestaltung der Partikelzähleinrichtung besteht ein Nachteil insbesondere darin, dass sich die während einer Abdrehprobe zu der Zähleinrichtung im Kreislauf geführten Verteilgutpartikeln an vielen Stellen der Verteilmaschine anreichern bzw. zurückbleiben können, wie beispielsweise im Injektor oder in der Förderleitung selbst, so dass wiederum die Gefahr von Dosierfehlern besteht, wenn nicht alle Verteilgutpartikel gezählt werden können. Überdies gestaltet sich die Abdrehprobe als relativ zeitaufwändig.

Aus der DE 10 2016 012 254 A1 ist eine weitere pneumatische Verteilmaschine bekannt, bei welcher automatisierte Abdrehproben dadurch durchgeführt werden können, indem das mit einem bestimmten Verteilguttyp beaufschlagte Dosierrad des Dosierorgans über einen vorherbestimmten Probenahmezeitraum mit einer vorherbestimmten Drehzahl betätigt und die während der Abdrehprobe dosierte Masse an Verteilgut in einer Wiegekammer gravimetrisch erfasst wird, wonach aus der derart erhaltenen Masse an Verteilgut bezogen auf den Probenahmezeitraum und die Drehzahl des Dosierrades eine funktionale Beziehung zwischen der Drehzahl des Dosierrades des Dosierorgans und dem hiermit dosierten Ist-Massenstrom an Verteilgut errechnet und das Dosierorgan sodann in Abhängigkeit dieser funktionalen Beziehung auf einen Soll-Massenstrom an Verteilgut gesteuert bzw. geregelt wird. Da die Wiegekammer stromab des Dosierorgans und stromauf der Übergabekammer oder in der Übergabekammer selbst angeordnet ist, kann das anlässlich der Abdrehprobe dosierte Verteilgut an die Förderleitung übergeben und ausgebracht werden, ohne in den Vorratsbehälter zurückgeführt zu werden. Während sich eine solche Ausgestaltung in der Praxis gut bewährt hat, besteht ein grundsätzlicher Nachteil bei der Durchführung von Abdrehproben darin, dass eine nicht unerhebliche Menge an Verteilgut anfällt, was entweder in konstruktiv aufwändiger Weise zurückgeführt oder ausgebracht werden muss.

Der Erfindung liegt die Aufgabe zugrunde, eine pneumatische Verteilmaschine der eingangs genannten Art sowie ein Verfahren zur Regelung des Massenstromes an Verteilgut ihres Dosierorgans unter zumindest weitestgehender Vermeidung der vorgenannten Nachteile auf einfache und kostengünstige Weise dahingehend weiterzubilden, dass eine präzise und schnelle, automatische Massenstromregelung gewährleistet wird, ohne mittels des Dosierorgans selbst Abdrehproben durchführen zu müssen.

In verfahrenstechnischer Hinsicht wird diese Aufgabe erfindungsgemäß bei einem Verfahren zur Regelung des Massenstromes an Verteilgut wenigstens eines regelbaren Dosierorgans einer pneumatischen Verteilmaschine der eingangs genannten Art dadurch gelöst, dass als Regelgröße ferner das für den Ist-Massenstrom an Verteilgut repräsentative Drehmoment des wenigstens einen Rotors in dem pneumatischen Fördersystem sensorisch ermittelt, an die Regeleinrichtung übermittelt und hieraus der Ist-Massenstrom an Verteilgut anhand wenigstens eines in der Regeleinrichtung oder in einer dieser zugeordneten Speichereinrichtung hinterlegten funktionalen Zusammenhangs zwischen dem Drehmoment des Rotors und dem auf den Rotor auftreffenden Massenstrom an Verteilgut ermittelt wird, woraufhin die Abweichung des Ist-Massenstromes an Verteilgut von dem Soll-Massenstrom an Verteilgut ermittelt und eine für den Betriebszustand des Dosierorgans repräsentative Stellgröße generiert wird, um das Dosierorgan auf den Soll-Massenstrom nachzuregeln.

Zur Lösung dieser Aufgabe sieht die Erfindung bei einer pneumatischen Verteilmaschine der eingangs genannte Art ferner vor, dass dem wenigstens einen Rotor in dem pneumatischen Fördersystem ein zur Ermittlung seines für den Ist-Massenstrom an Verteilgut repräsentativen Drehmomentes ausgebildeter und mit der Regeleinrichtung in Verbindung stehender Sensor zugeordnet ist, dass in der Regeleinrichtung oder in einer dieser zugeordneten Speichereinrichtung wenigstens ein funktionaler Zusammenhang zwischen dem Drehmoment des Rotors und dem auf den Rotor auftreffenden Massenstrom an Verteilgut hinterlegt ist, und dass die Regeleinrichtung zur Ermittlung des Ist-Massenstromes an Verteilgut anhand des als Regelgröße dienenden Drehmomentes des Rotors und des hinterlegten funktionalen Zusammenhangs zwischen dem Drehmoment des Rotors und dem Massenstrom an Verteilgut ausgebildet ist, wobei die Regeleinrichtung ferner zur Ermittlung der Abweichung des Ist-Massenstromes an Verteilgut von dem Soll-Massenstrom an Verteilgut sowie zur Generierung einer für den Betriebszustand des Dosierorgans repräsentativen Stellgröße ausgebildet ist, um das Dosierorgan auf den Soll-Massenstrom nachzuregeln.

Die Erfindung zeichnet sich durch eine völlige Abkehr bekannter Massenstromregelungen von gattungsgemäßen pneumatischen Verteilmaschinen aus, indem zur Regelung des Dosierorgans auf den Soll-Massenstrom an Verteilgut das für den Ist-Massenstrom repräsentative Drehmoment des bzw. eines jeweiligen, in dem pneumatischen Fördersystem angeordneten Rotors sensorisch ermittelt wird, welches sich daraus ergibt, dass das auf den (jeweiligen) Rotor auftreffende Verteilgut mittels der Rotorblätter im Wesentlichen radial nach außen beschleunigt wird. Dieses sensorisch ermittelte Drehmoment wird an die zur Regelung des Dosierorgans bzw. der Dosierorgane dienende Regeleinrichtung der Verteilmaschine übermittelt, wobei in der Regeleinrichtung oder in der dieser zugeordneten Speichereinrichtung wenigstens ein funktionaler Zusammenhang zwischen dem Drehmoment des Rotors und dem auf den Rotor auftreffenden Massenstrom an Verteilgut hinterlegt ist, z.B. in Form von Kennlinien, Kennfeldern, Kennkurven, mathematischen Funktionen, Algorithmen oder dergleichen, welcher beispielsweise experimentell ermittelt worden ist. Hieraus vermag die Regeleinrichtung sodann eine etwaige Abweichung des Ist-Massenstromes an Verteilgut von dem Soll-Massenstrom an Verteilgut, welcher der Regeleinrichtung zuvor beispielsweise in Abhängigkeit von der Soll-Verteilmenge pro Flächeneinheit, der vorgesehenen Fahrgeschwindigkeit der Verteilmaschine und der gewünschten Arbeitsbreite als Führungsgröße eingegeben worden ist bzw. welchen die Regeleinrichtung aus der Eingabe der vorgenannten Parameter bestimmt, zu ermitteln und eine für den Betriebszustand des Dosierorgans repräsentative Stellgröße zu generieren, um das Dosierorgan auf den Soll-Massenstrom nachzuregeln.

Die erfindungsgemäße Ausgestaltung bietet dabei eine Reihe von Vorteilen. So ist das für den Massenstrom an Verteilgut repräsentative Drehmoment des Rotors weitestgehend unabhängig von dem jeweiligen Verteilguttyp, so dass letzterer für die Massenstromregelung nicht notwendigerweise berücksichtigt werden muss. Darüber hinaus kann das erfindungsgemäße Verfahren vorzugsweise im Wesentlichen kontinuierlich, insbesondere weitestgehend in Echtzeit, während des Betriebs der Verteilmaschine durchgeführt werden, so dass auch geringe Abweichungen des Ist-Massenstromes an Verteilgut von dem Soll-Massenstrom unmittelbar erkannt werden können und das Dosierorgan stets auf den Soll-Massenstrom an Verteilgut nachgeregelt werden kann. Abdrehproben, welche ansonsten während des Betriebs, z.B. anlässlich eines Wendens der Verteilmaschine im Vorgewende, durchgeführt werden, macht die Erfindung entbehrlich, wobei gegebenenfalls vor Beginn der Verteilarbeit eine Abdrehprobe durchgeführt werden kann, um für den gewünschten Soll-Massenstrom eines bestimmten Verteilguttyps einen entsprechenden Betriebszustand des Dosierorgans zu ermitteln, welcher als Startwert des Betriebszustandes des Dosierorgans herangezogen und vorzugsweise für den jeweiligen Verteilguttyp in der Regeleinrichtung abgespeichert werden kann.

Wie als solches aus dem Stand der Technik der oben zitierten IT AN 2013 000030 A1 oder DE 10 2019 128 863 A1 bekannt, ist der wenigstens eine Rotor zweckmäßigerweise rotationssymmetrisch ausgestaltet und in dem pneumatischen Fördersystem der Verteilmaschine drehbar gelagert. Der Rotor kann dabei eine Mehrzahl an Rotorblättern aufweisen, welche beispielsweise gebogene und/oder tordierte Flächen besitzen und z.B. einem Propeller, einem Schaufelrad oder einer Turbine ähneln können. Der Rotor kann ferner vorzugweise in seinem Zentrum nach Art eines Kreiskegels, z.B. mit konkaver Mantelfläche, in Richtung des auftreffenden fluidisierten Verteilgutstromes vorstehen, um keine nennenswerte Staufläche für die Verteilgutpartikel zu bilden und diese nicht zu beschädigen.

Die Erfindung bietet dabei auch die Möglichkeit, die Zeitdifferenz zu erfassen, welche der fluidisierte Verteilgutstrom benötigt, um nach seiner Dosierung mittels des wenigstens einen Dosierorgans pneumatisch an den mit dem Rotor versehenen Abschnitt des pneumatischen Fördersystems zu gelangen. So kann beispielsweise die Zeitdifferenz zwischen einem Einschalten des Dosierorgans und dem Auftreffen der dosierten Verteilgutpartikel auf den Rotor erfasst werden (es tritt zu diesem Zeitpunkt ein Peak des sensorisch erfassten Drehmomentes des Rotors auf), wobei diese Zeitdifferenz während der Steuerung und/oder Regelung des wenigstens einen Dosierorgans während der Verteilarbeit berücksichtigt werden kann, indem das wenigstens eine Dosierorgan beispielsweise in Abhängigkeit der Fahrgeschwindigkeit und der, insbesondere mittels eines Positionserfassungssystems, wie GPS oder dergleichen, ermittelten Ist-Position der Verteilmaschine auf einem Feld mit einem entsprechenden Zeitversatz ab- bzw. eingeschaltet wird, wenn die Verteilmaschine z.B. auf einen Feldrand zufährt bzw. sich von diesem (wieder) fort bewegt, wenn Teilbreiten der Verteilmaschine ab- bzw. zugeschaltet werden sollen und/oder wenn eine elektronische Applikationskarte Änderungen der Soll-Dosiermenge an Verteilgut pro Flächeneinheit erfordert.

Der Vollständigkeit halber sei an dieser Stelle darauf hingewiesen, dass die Förderleitungen nicht notwendigerweise unmittelbar an einem jeweiliges Verteilorgan münden müssen, sondern beispielsweise auch in je einen einer Mehrzahl an dezentralen, z.B. an Auslegern der pneumatischen Verteilmaschine festgelegten, Behältern einmünden können, welche z.B. ihrerseits über dezentrale Dosierorgane verfügen, um das Verteilgut von einem jeweiligen dezentralen Behälter an ein Verteilorgan oder an eine Gruppe von Verteilorganen zu überführen, wie es als solches beispielsweise aus der eingangs zitierten WO 2021/083536 A1 bekannt ist.

Während das wenigstens eine Dosierorgan der erfindungsgemäßen Verteilmaschine grundsätzlich von beliebiger bekannter Bauart sein kann, kann es zweckmäßigerweise - wie als solches bei gattungsgemäßen pneumatischen Verteilmaschinen gebräuchlich - wenigstens ein Dosierrad umfassen, welches mittels wenigstens eines mit der Regeleinrichtung in Verbindung stehenden und von dieser geregelten Dosierantriebs drehangetrieben ist. In diesem Fall sieht das erfindungsgemäße Verfahren vor, dass mittels der Regeleinrichtung als für den Betriebszustand des Dosierorgans repräsentative Stellgröße die Drehgeschwindigkeit des Dosierantriebs bzw. des hiermit in Verbindung stehenden, wenigstens einen Dosierrades des Dosierorgans generiert wird, um das Dosierorgan auf den Soll-Massenstrom nachzuregeln. Als Führungsgröße für den Soll-Massenstrom an Verteilgut dient in diesem Fall gleichfalls die Drehgeschwindigkeit des Dosierantriebs bzw. des hiermit in Verbindung stehenden, wenigstens einen Dosierrades des Dosierorgans.

Bei einer pneumatischen Verteilmaschine kann in diesem Zusammenhang demnach vorgesehen sein, dass das Dosierorgan wenigstens ein Dosierrad umfasst, welches mittels wenigstens eines mit der Regeleinrichtung in Verbindung stehenden und von dieser geregelten Dosierantriebs drehangetrieben ist, wobei die Regeleinrichtung zur Generierung einer Drehgeschwindigkeit des Dosierantriebs als für den Betriebszustand des Dosierorgans repräsentative Stellgröße ausgebildet ist, um das Dosierorgan auf den Soll-Massenstrom nachzuregeln.

Gemäß einer vorteilhaften Ausgestaltung des erfindungsgemäßen Verfahrens kann vorgesehen sein, dass ferner die Drehzahl des Rotors
- sensorisch ermittelt und an die Regeleinrichtung übermittelt; und/oder
- mittels einer Eingabeeinrichtung in die Regeleinrichtung eingegeben wird, um den Rotor mit der eingegebenen Drehzahl in Rotation zu versetzen,
wobei die für den Betriebszustand des Dosierorgans repräsentative Stellgröße ferner in Abhängigkeit der Drehzahl des Rotors generiert wird. Da das für den Ist-Massenstrom an Verteilgut repräsentative Drehmoment des Rotors auch von seiner Drehzahl abhängt, ist es auf diese Weise möglich, den Rotor je nach Soll-Massenstrom und/oder je nach Strömungsgeschwindigkeit des mittels des Gebläses eingestellten Förderluftstromes mit verschiedenen Drehzahlen zu betreiben, ohne die erfindungsgemäße Massenstromregelung des Dosierorgans zu beeinträchtigen.

Bei eine dementsprechend ausgestalteten pneumatischen Verteilmaschine ist demnach vorzugsweise vorgesehen, dass sie ferner
- einen dem Rotor zugeordneten und mit der Regeleinrichtung in Verbindung stehenden Drehzahlsensor aufweist oder der zur Ermittlung des für den Ist-Massenstrom an Verteilgut repräsentativen Drehmomentes ausgebildete und mit der Regeleinrichtung in Verbindung stehende Sensor ferner zur Erfassung der Drehzahl des Rotors ausgebildet ist; und/oder
- eine der Regeleinrichtung zugeordnete Eingabeeinrichtung aufweist, welche zur Eingabe einer Drehzahl des Rotors ausgebildet ist,
wobei die Regeleinrichtung ferner zur Generierung der für den Betriebszustand des Dosierorgans repräsentativen Stellgröße in Abhängigkeit der Drehzahl des Rotors ausgebildet ist. Der Drehzahlsensor kann dabei beispielsweise in den Rotorantrieb integriert sein und z.B. die Drehzahl einer Abtriebswelle des Rotorantriebs erfassen, oder es kann auch ein außerhalb des Rotorantriebs angeordneter Drehzahlsensor vorgesehen sein, welcher die Drehzahl einer den Rotor tragenden Welle oder eine beliebigen anderen Welle in dem den Rotorantrieb mit dem Rotor verbindenden Antriebsstrang erfasst und an die Regeleinrichtung übermittelt. Darüber hinaus kann entweder ein separater Drehzahlsensor vorgesehen sein, oder der zur Ermittlung des für den Ist-Massenstrom an Verteilgut repräsentativen Drehmomentes des Rotors ausgebildete Sensor kann insbesondere auch zugleich zur Erfassung der Drehzahl des Rotors ausgebildet sein.

In diesem Zusammenhang kann zweckmäßigerweise vorgesehen sein, dass
- der wenigstens eine funktionale Zusammenhang zwischen dem Drehmoment des Rotors und dem auf den Rotor auftreffenden Massenstrom an Verteilgut wenigstens einen drehzahlabhängigen Faktor aufweist; und/oder
- für eine Mehrzahl an Drehzahlen oder Drehzahlbereichen des Rotors eine Mehrzahl an funktionalen Zusammenhängen zwischen dem Drehmoment des Rotors und dem auf den Rotor auftreffenden Massenstrom an Verteilgut in der Regeleinrichtung oder in der dieser zugeordneten Speichereinrichtung abgespeichert sind (der jeweilige funktionale Zusammenhang kann somit in Abhängigkeit von der jeweils aktuellen Drehzahl bzw. von dem jeweils aktuellen Drehzahlbereich des Rotors von der Regeleinrichtung ausgewählt werden); und/oder
- für eine Mehrzahl an Drehzahlen oder Drehzahlbereichen des Rotors wenigstens ein Korrekturfaktor in der Regeleinrichtung oder in der dieser zugeordneten Speichereinrichtung abgespeichert ist, um welchen der wenigstens eine funktionale Zusammenhang zwischen dem Drehmoment des Rotors und dem auf den Rotor auftreffenden Massenstrom an Verteilgut bei der jeweiligen Drehzahl oder in dem jeweiligen Drehzahlbereich korrigiert wird (der funktionale Zusammenhang wird also von der Regeleinrichtung um einen von der jeweils aktuellen Drehzahl bzw. von dem jeweils aktuellen Drehzahlbereich des Rotors abhängigen, abgespeicherten Faktor korrigiert),
um die für den Betriebszustand des Dosierorgans repräsentative Stellgröße unter Berücksichtigung der Drehzahl des Rotors zu generieren. Selbstverständlich kann hierbei auch eine Mehrzahl an funktionalen Abhängigkeiten zwischen dem Drehmoment des Rotors und dem auf diesen auftreffenden Massenstrom an Verteilgut und/oder eine Mehrzahl an Korrekturfaktoren für eine Mehrzahl an verschiedenen Drehzahl(bereich)en des Rotors hinterlegt sein.

In ähnlicher Weise kann alternativ oder zusätzlich beispielsweise vorgesehen sein, dass für eine Mehrzahl an Massenströmen oder Massenstrombereichen an Verteilgut
- der wenigstens eine funktionale Zusammenhang zwischen dem Drehmoment des Rotors und dem auf den Rotor auftreffenden Massenstrom an Verteilgut wenigstens einen von dem Massenstrom oder einem Massenstrombereich an Verteilgut abhängigen Faktor aufweist; und/oder
- eine Mehrzahl an funktionalen Zusammenhängen zwischen dem Drehmoment des Rotors und dem jeweiligen auf den Rotor auftreffenden Massenstrom oder Massenstrombereich an Verteilgut in der Regeleinrichtung oder in der dieser zugeordneten Speichereinrichtung abgespeichert sind; und/oder
- wenigstens ein Korrekturfaktor in der Regeleinrichtung oder in der diesem zugeordneten Speichereinrichtung abgespeichert ist, um welchen der wenigstens eine funktionale Zusammenhang zwischen dem Drehmoment des Rotors und dem auf den Rotor auftreffenden Massenstrom an Verteilgut bei dem jeweiligen Massenstrom oder Massenstrombereich an Verteilgut korrigiert wird,
um die für den Betriebszustand des Dosierorgans repräsentative Stellgröße in Abhängigkeit des auf den Rotor auftreffenden Massenstromes an Verteilgut zu generieren. Auf diese Weise lassen sich auch bei sehr geringen oder sehr großen Massenströmen an Verteilgut und/oder bei sehr geringen oder sehr hohen Strömungsgeschwindigkeiten des pneumatischen Förderluftstromes Dosierfehler vermeiden, sofern der wenigstens eine funktionale Zusammenhang zwischen dem Drehmoment des Rotors und dem auf den Rotor auftreffenden Massenstrom an Verteilgut nicht mit einer hinreichenden Genauigkeit auf alle mit dem jeweiligen Dosierorgan dosierbaren Massenströme an Verteilgut anwendbar sein sollte.

Während das für den Ist-Massenstrom an Verteilgut repräsentative Drehmoment des Rotors grundsätzlich mittels beliebiger bekannter, hierfür geeigneter Sensoren erfasst werden kann, kann in vorteilhafter Ausgestaltung vorgesehen sein, dass das Drehmoment des Rotors dadurch sensorisch ermittelt wird, indem
- die Torsion einer den Rotor tragenden Welle oder einer Welle des Rotorantriebs (dies kann insbesondere unabhängig von der Art des Rotorantriebs geschehen); und/oder
- die elektrische Stromaufnahme eines elektrischen Rotorantriebs (sofern es sich bei dem Rotorantrieb um einen Elektromotor, wie z.B. um einen Servomotor oder dergleichen handelt); und/oder
- der elektrische Spannungsabfall eines elektrischen Rotorantriebs (sofern es sich bei dem Rotorantrieb wiederum um einen Elektromotor handelt); und/oder
- die Druckdifferenz eines hydraulischen Rotorantriebs (sofern es sich bei dem Rotorantrieb z.B. um einen Hydromotor handelt)
sensorisch ermittelt wird, wobei dem Umstand Rechnung getragen wird, dass sowohl die Torsion einer Welle im Antriebsstrang des Rotors als auch die Lastaufnahme des Rotorantriebs, für welche im Falle eines elektrischen Rotorantriebs die Stromaufnahme und/oder der Spannungsabfall bzw. im Falle eines hydraulischen Rotorantriebs die dort anliegende Druckdifferenz repräsentativ sind, proportional zum Drehmoment des Rotors sind.

Bei einer erfindungsgemäßen pneumatischen Verteilmaschine kann in diesem Zusammenhang vorzugsweise vorgesehen sein, dass es sich bei dem zur Ermittlung des für den Ist-Massenstrom an Verteilgut repräsentativen Drehmomentes ausgebildeten Sensor
- um einen zur berührungsfreien Ermittlung der Torsion einer den Rotor tragenden Welle oder einer Welle des Rotorantriebs ausgebildeten Sensor, insbesondere in Form eines Magnetostriktionssensors, wie eines Fluxgate-Magnetometers oder dergleichen; und/oder
- um einen zur Ermittlung der elektrischen Stromaufnahme eines elektrischen Rotorantriebs ausgebildeten Stromsensor; und/oder
- um einen zur Ermittlung des elektrischen Spannungsabfalls eines elektrischen Rotorantriebs ausgebildeten Spannungssensor; und/oder
- um einen zur Ermittlung der Druckdifferenz eines hydraulischen Rotorantriebs ausgebildeten Drucksensor handelt.

Was die sensorische Erfassung des Drehmomentes der den Rotor tragenden Welle oder einer Welle des Rotorantriebs bzw. dessen Antriebsstranges betrifft, so kann das Drehmoment einer solchen Welle oder eines anderen hiermit drehfest verbundenen Teils, wie z.B. einer auf dieser Welle sitzenden Hülse, demnach vorzugsweise dadurch berührungsfrei ermittelt werden, indem deren für das Drehmoment repräsentative Torsion sensorisch ermittelt wird. Hierzu ist es insbesondere möglich, dass Welle oder das hiermit drehfest verbundene Teil aus einem permanentmagnetischen, wie einem ferro- oder ferrimagnetischen, Material magnetisiert und die Veränderung des Magnetfeldes bei Torsion der Welle oder bei Torsion des hiermit drehfest verbundenen Teils sensorisch, insbesondere mittels wenigstens eines Magnetostriktionssensors, wie z.B. eines Fluxgate-Magnetometers, ermittelt wird. Es wird auf diese Weise folglich die Veränderung des Magnetfeldes der insbesondere permanentmagnetisch magnetisierten Welle bzw. der hiermit drehfest verbundenen, magnetisierten Teils infolge ihrer von dem einwirkenden Drehmoment abhängigen Torsion sensorisch ermittelt, welche aus den magnetoelastischen Eigenschaften der jeweils verwendeten - ferri- oder insbesondere ferromagnetischen - Materialien der Welle bzw. des hiermit drehfest verbundenen Teils resultiert. Die am Umfang der Welle bzw. des hiermit drehfest verbundenen Teils angeordneten Sensoren vermögen die Veränderungen dieses Magnetfeldes zu erfassen (z.B. mittels gegensinniger Empfängerspulen, in welchen in Abwesenheit eines Feldes sich die induzierten Spannungen aufheben, aber im Falle eines anliegenden Magnetfeldes infolge Torsion der Welle bzw. des hiermit drehfest verbundenen Teils ein hieraus resultierendes elektrisches Signal erzeugt wird, welches proportional zu dem Magnetfeld ist). Bei derartigen, auf der Ermittlung von Veränderungen des Magnetfeldes infolge einwirkender Drehmomente bzw. Torsion basierenden Sensoren ist es insbesondere auch möglich, zugleich die Drehzahl der Welle bzw. des hiermit drehfest verbundenen Teils zu erfassen, indem die Welle bzw. das hiermit drehfest verbundene Teil z.B. entsprechend magnetisch codiert wird. Der Sensor, wie z.B. in Form eines Magnetostriktionssensors, vermag dann auch die Drehzahl zu erfassen, welche z.B. aber auch optisch erfasst werden kann, wie über einen geeigneten Encoder, so dass ein separater Drehzahlsensor der oben genannten Art entbehrlich werden kann. Derartige Sensoren sind als solche bekannt und werden auch mit "Fluxgate-Magnetometer" oder "Förster-Sonde" bezeichnet.

Während eine solche Erfassung des Drehmomentes des Rotors unabhängig von dem jeweiligen Rotorantrieb erfolgen kann, kann im Falle eines elektrischen Rotorantriebs, z.B. in Form eines drehzahlsteuerbaren Servomotors, zur sensorischen Erfassung des Drehmomentes des Rotors auch ein zur Ermittlung der elektrischen Stromaufnahme und/oder zur Ermittlung des elektrischen Spannungsabfalls des elektrischen Rotorantriebs ausgebildeten Strom- und/oder Spannungssensor vorgesehen sein, wobei die Stromaufnahme bzw. der Spannungsabfall gleichfalls proportional zum Drehmoment des hierdurch drehangetriebenen Rotors ist. Derartige Sensoren können insbesondere auch in den elektrischen Rotorantrieb integriert sein, wobei es auch in diesem Fall denkbar ist, einen Drehzahlsensor in den elektrischen Rotorantrieb zu integrieren, so dass ein separater Drehzahlsensor wiederum entbehrlich werden kann. Im Falle eines hydraulischen Rotorantriebs, wie eines z.B. wiederum drehzahlsteuerbaren Hydromotors, ist es zudem denkbar, das Drehmoment des Rotors mittels, z.B. in einen Hydromotor integrierter, Drucksensoren zu erfassen, welche die zu dem Drehmoment des Rotors proportionale Druckdifferenz des hydraulischen Rotorantriebs erfassen.

In vorteilhafter Ausgestaltung des erfindungsgemäßen Verfahrens kann ferner vorgesehen sein, dass das für den Ist-Massenstrom an Verteilgut repräsentative Drehmoment des Rotors einerseits, insbesondere in periodischen Zeitabständen, im Leerlauf bei geschlossenem Dosierorgan und folglich unbelastetem Rotor, andererseits bei Belastung des Rotors mit dem Ist-Massenstrom an Verteilgut sensorisch ermittelt wird, wobei der im Leerlauf ermittelte Wert von dem unter Last ermittelten Gesamtwert subtrahiert wird, um den nur durch den Ist-Massenstrom an Verteilgut bewirkten Differenzwert zu ermitteln, wobei dieser Differenzwert als die für den Ist-Massenstrom repräsentative Regelgröße verwendet wird, um hieraus die für den Betriebszustand des Dosierorgans repräsentative Stellgröße zu generieren und das Dosierorgan auf den Soll-Massenstrom nachzuregeln. Das Leerlaufdrehmoment des Rotors, welches beispielsweise aufgrund temperaturbedingter Änderungen der Viskosität der für die Lagerung des Rotors und/oder in dem Rotorantrieb verwendeten Schmiermitteln nicht unerheblichen Schwankungen unterworfen sein kann, wird folglich durch die genannte Differenzwertbildung von Lastdrehmoment und Leerlaufdrehmoment eliminiert, um die Messgenauigkeit und folglich die Genauigkeit der Stellgröße des Dosierorgans, welche anhand der sensorisch erfassten Last- bzw. Leerlaufdrehmomente generiert wird, zu erhöhen.

Darüber hinaus lassen sich durch eine solche Differenzwertbildung des Lastdrehmomentes und des Leerlaufdrehmomentes insbesondere auch Schwankungen des mittels des Gebläses erzeugten Förderluftstromes kompensieren, da das durch den reinen Förderluftstrom induzierte Drehmoment des Rotors eliminiert wird. Alternativ oder zusätzlich kann selbstverständlich insbesondere - wenngleich nicht ausschließlich - dann, wenn das Gebläse z.B. gleichfalls mittels der Regeleinrichtung auf verschiedene Förderluftströme einstellbar ist, wiederum vorgesehen sein, dass
- der wenigstens eine funktionale Zusammenhang zwischen dem Drehmoment des Rotors und dem auf den Rotor auftreffenden Massenstrom an Verteilgut wenigstens einen von dem Förderluftstrom oder von Förderluftstrombereichen des Gebläses abhängigen Faktor aufweist; und/oder
- für eine Mehrzahl an Förderluftströmen oder Förderluftstrombereichen des Gebläses eine Mehrzahl an funktionalen Zusammenhängen zwischen dem Drehmoment des Rotors und dem auf den Rotor auftreffenden Massenstrom an Verteilgut in der Regeleinrichtung oder in der dieser zugeordneten Speichereinrichtung abgespeichert sind; und/oder
- für eine Mehrzahl an Förderluftströmen oder Förderluftstrombereichen des Gebläses wenigstens ein Korrekturfaktor in der Regeleinrichtung oder in der dieser zugeordneten Speichereinrichtung abgespeichert ist, um welchen der wenigstens eine funktionale Zusammenhang zwischen dem Drehmoment des Rotors und dem auf den Rotor auftreffenden Massenstrom an Verteilgut bei dem jeweiligen Förderluftstrom oder Förderluftstrombereich des Gebläses korrigiert wird,
um die für den Betriebszustand des Dosierorgans repräsentative Stellgröße auch unter Berücksichtigung des Förderluftstromes des Gebläses zu generieren, wie es weiter oben in ähnlicher Weise beispielsweise in Bezug auf verschiedene Drehzahlen des Rotors oder Massenströmen an Verteilgut erläutert ist.

Wie eingangs erwähnt, umfassen gattungsgemäße pneumatische Verteilmaschinen häufig mehrere, unabhängig voneinander geregelte Dosierorgane, welche beispielsweise zur Versorgung von Gruppen von Verteilorganen dienen, und/oder sie umfassen zumindest ein mit einem Dosierrad ausgebildetes Dosierorgan mit einer Mehrzahl an unabhängig voneinander geregelten Dosierradsegmenten auf, welche beispielsweise zur Versorgung je eines Verteilorgans oder wiederum Gruppen von Verteilorganen dienen. In diesem Fall macht es die Erfindung selbstverständlich auch möglich, die einzelnen Dosierorgane bzw. die einzelnen Dosierradsegmente des Dosierrades des oder der Dosierorgane unabhängig voneinander auf den gewünschten Massenstrom an Verteilgut zu regeln, indem jedem Dosierorgan bzw. jedem Dosierradsegment des Dosierrades eines (jeweiligen) Dosierorgans ein separater Rotor in dem pneumatischen Fördersystem der Verteilmaschine zugeordnet ist. Demnach kann in vorteilhafter Ausgestaltung des erfindungsgemäßen Verfahrens vorgesehen sein, dass zur Regelung des Ist-Massenstromes an Verteilgut
- von wenigstens zwei unabhängig voneinander regelbaren Dosierorganen; und/oder
- von wenigstens zwei unabhängig voneinander regelbaren

Dosierradsegmenten eines Dosierrades des Dosierorgans der pneumatischen Verteilmaschine der Soll-Massenstrom an Verteilgut
- eines jeweiligen Dosierorgans; und/oder
- eines jeweiligen Dosierradsegmentes des Dosierrades des Dosierorgans
der Regeleinrichtung als - gemeinsame oder jeweilige, für das jeweilige Dosierorgan bzw. für das jeweilige Dosierradsegment maßgebliche - Führungsgröße eingegeben wird, wobei ferner als Regelgröße das für den Ist-Massenstrom repräsentative Drehmoment
- je eines, dem jeweiligen Dosierorgan zugeordneten Rotors; und/oder
- je eines, dem jeweiligen Dosierradsegment des Dosierrades des Dosierorgans zugeordneten Rotors
in dem pneumatischen Fördersystem unabhängig voneinander sensorisch ermittelt, an das Regelgerät übermittelt und hieraus jeweils der Ist-Massenstrom an Verteilgut anhand des wenigstens einen in der Regeleinrichtung oder in der dieser zugeordneten Speichereinrichtung hinterlegten funktionalen Zusammenhangs zwischen dem Drehmoment des jeweiligen Rotors und dem auf den jeweiligen Rotor auftreffenden Massenstrom an Verteilgut unabhängig voneinander ermittelt wird, woraufhin die Abweichung des Ist-Massenstromes an Verteilgut von dem Soll-Massenstrom an Verteilgut
- für jedes Dosierorgan; und/oder
- für jedes Dosierradsegment des Dosierrades des Dosierorgans
ermittelt und je eine für den Betriebszustand
- des jeweiligen Dosierorgans; und/oder
- des jeweiligen Dosierradsegmentes des Dosierrades des Dosierorgans
repräsentative Stellgröße generiert wird, um
- das jeweilige Dosierorgan; und/oder
- das jeweilige Dosierradsegment des Dosierrades des Dosierorgans
auf den Soll-Massenstrom nachzuregeln.

Bei einer entsprechenden pneumatischen Verteilmaschine kann in diesem Zusammenhang vorzugsweise vorgesehen sein, dass sie einerseits
- wenigstens zwei unabhängig voneinander regelbare Dosierorgane; und/oder
- ein Dosierorgan in Form eines Dosierrades mit wenigstens zwei unabhängig voneinander regelbaren Dosierradsegmenten aufweist, andererseits
- je einen, dem jeweiligen Dosierorgan zugeordneten Rotor; und/oder
- je einen, dem jeweiligen Dosierradsegment des Dosierrades des Dosierorgans zugeordneten Rotor
in dem pneumatischen Fördersystem aufweist, wobei einem jeweiligen Rotor je ein zur Ermittlung seines für den Ist-Massenstrom an Verteilgut repräsentativen Drehmomentes ausgebildeter und mit der Regeleinrichtung in Verbindung stehender Sensor zugeordnet ist, wobei die Regeleinrichtung zur Ermittlung des Ist-Massenstromes an Verteilgut
- eines jeweiligen Dosierorgans; und/oder
- eines jeweiligen Dosierradsegmentes des Dosierrades des Dosierorgans
anhand des als Regelgröße dienenden Drehmomentes des jeweiligen Rotors und des hinterlegten funktionalen Zusammenhangs zwischen dem Drehmoment des jeweiligen Rotors und dem Massenstrom an Verteilgut ausgebildet ist, wobei die Regeleinrichtung ferner zur Ermittlung der Abweichung des Ist-Massenstromes an Verteilgut von dem Soll-Massenstrom an Verteilgut sowie zur Generierung einer für den Betriebszustand
- eines jeweiligen Dosierorgans; und/oder
- eines jeweiligen Dosierradsegmentes des Dosierrades des Dosierorgans
repräsentativen Stellgröße ausgebildet ist, um
- ein jeweiliges Dosierorgan; und/oder
- ein jeweiliges Dosierradsegment des Dosierrades des Dosierorgans
auf den Soll-Massenstrom nachzuregeln.

Gemäß einer vorteilhaften Weiterbildung des erfindungsgemäßen Verfahrens kann vorgesehen sein, dass ferner wenigstens eine Neigung der pneumatischen Verteilmaschine um wenigstens eine horizontale Achse, insbesondere um zwei horizontale Achsen, wie z.B. einerseits um eine sich etwa parallel zur Fahrtrichtung und andererseits um eine sich etwa senkrecht zur Fahrtrichtung erstreckende Achse oder allgemein um zwei im Wesentlichen senkrecht zueinander angeordnete Achsen, ermittelt und an die Regeleinrichtung übermittelt wird, wobei der wenigstens eine in der Regeleinrichtung oder in der dieser zugeordneten Speichereinrichtung hinterlegte funktionale Zusammenhang zwischen dem Drehmoment des Rotors und dem auf den Rotor auftreffenden Massenstrom an Verteilgut in Abhängigkeit von der Neigung der pneumatischen Verteilmaschine um die wenigstens eine horizontale Achse modifiziert wird, um die für den Betriebszustand des Dosierorgans repräsentative Stellgröße unter Berücksichtigung der Neigung der pneumatischen Verteilmaschine zu generieren. Auf diese Weise lässt sich dem Umstand begegnen, dass mit zunehmender Neigung der Verteilmaschine in Bezug auf die Horizontalebene, wie sie beispielsweise bei der Fahrt etwa hangauf- oder hangabwärts sowie auch etwa parallel oder schräg zu einer Hanglage auftreten kann, Dosierfehler verursacht werden können, weil das in dem pneumatischen Fördersystem transportierte Verteilgut aufgrund Gravitation nicht mehr relativ gleichmäßig auf den Rotor auftrifft, sondern sich über den Querschnitt des Rotors ein Massengradient der fluidisierten Verteilgutpartikel einstellen kann, so dass es zumindest lokal zu einen Über- und/oder Unterversorgung kommen könnte, die es aus Umweltschutz- und Ertragsgründen sowie aus Kostengründen zu verhindern gilt. Der Regeleinrichtung kann in einem solchen Fall daher vorzugsweise der Neigungswinkel der Verteilmaschine um die (jeweilige) horizontale Achse mitgeteilt werden, was - wie oben bereits erwähnt - wiederum zweckmäßigerweise kontinuierlich und in Echtzeit geschehen kann. Der in der Regeleinrichtung oder in deren Speichereinrichtung hinterlegte funktionale Zusammenhang zwischen dem Drehmoment des Rotors und dem hierauf auftreffenden Massenstrom an Verteilgut wird sodann in Abhängigkeit der Neigung der Verteilmaschine um die wenigstens eine horizontale Achse modifiziert, um eine etwaige neigungsbedingte Abweichung des Drehmomentes zu kompensieren, so dass die für den Betriebszustand des Dosierorgans repräsentative Stellgröße, wie z.B. die Drehzahl eines Dosierrades, unter Berücksichtigung der Neigung der Verteilmaschine generiert wird und neigungsbedingte Über- und Unterdosierungen zuverlässig vermieden werden.

Eine dementsprechend ausgestaltete Verteilmaschine kann demnach vorzugsweise wenigstens einen zur Neigung der pneumatischen Verteilmaschine um wenigstens eine horizontale Achse, insbesondere um zwei horizontale Achsen (siehe oben), ausgebildeten und mit der Regeleinrichtung in Verbindung stehenden Neigungssensor aufweisen, wobei die Regeleinrichtung ferner zur Modifizierung des wenigstens einen in der Regeleinrichtung oder in der dieser zugeordneten Speichereinrichtung hinterlegten funktionalen Zusammenhangs zwischen dem Drehmoment des Rotors und dem auf den Rotor auftreffenden Massenstrom an Verteilgut in Abhängigkeit von der Neigung der pneumatischen Verteilmaschine um die wenigstens eine horizontale Achse ausgebildet ist, um die für den Betriebszustand des Dosierorgans repräsentative Stellgröße unter Berücksichtigung der Neigung der pneumatischen Verteilmaschine zu generieren.

Wie als solches bei pneumatischen Verteilmaschinen bekannt, kann das pneumatische Fördersystem der Verteilmaschine beispielsweise eine Mehrzahl an Förderleitungen aufweisen, welche von einer jeweiligen Übergabekammer in Richtung je eines Verteilorgans der Verteilmaschine führen. Der wenigstens eine Rotor kann in diesem Fall in zumindest einer der Förderleitungen angeordnet sein, welche eine jeweilige Übergabekammer mit einem jeweiligen Verteilorgan oder mit einem diesem zugeordneten dezentralen Behälter verbindet. Hierbei ist es einerseits denkbar, dass alle Förderleitungen mit je einem Rotor mit je einem individuellen Rotorantrieb versehen sind, um beispielsweise ein jeweiliges Dosierorgan bzw. insbesondere ein jeweiliges Dosierradsegment des Dosierrades eines oder mehrerer Dosierorgane individuell auf den Soll-Massenstrom an Verteilgut zu regeln, welcher dem jeweiligen Verteilorgan zugedacht ist. Andererseits kann es aus Kostengründen auch denkbar sein, dass nur eine oder einige Förderleitung(en) mit (je) einem Rotor mit je einem individuellen Rotorantrieb versehen ist bzw. sind, wobei die Regeleinrichtung in diesem Fall die Dosierorgane bzw. die Dosierradsegmente, deren ihnen zugeordnete Förderleitung nicht mit einem Rotor versehen ist, mit einer entsprechenden, für ihren Betriebszustand repräsentativen Stellgröße versorgt, d.h. es wird unterstellt, dass die Stellgröße, wie z.B. die Drehgeschwindigkeit des Dosierrad(segment)es, bei entsprechendem Soll-Massenstrom dieselbe ist wie jene, wie sie für ein baugleiches Dosierrad(segment) über das Drehmoment des jeweiligen Rotors sensorisch ermittelt worden ist.

Wie als solches bei pneumatischen Verteilmaschinen gleichfalls bekannt, kann das pneumatische Fördersystem der Verteilmaschine beispielsweise auch wenigstens einen Verteilerkopf umfassen, in welchen wenigstens eine Förderleitung von wenigstens einer Übergabekammer einmündet und welcher eine Mehrzahl an, insbesondere um seinen Umfang verteilt angeordnete, Anschlüsse aufweist, an welche sich je eine, an einem jeweiligen Verteilorgan mündende Verteilerleitung anschließt. In diesem Fall kann der Rotor wiederum grundsätzlich einerseits in der Förderleitung stromauf des Verteilerkopfes oder kann ein jeweiliger Rotor in einer jeweiligen Verteilerleitung stromab des Verteilerkopfes angeordnet sein, wobei der Rotor mit Vorteil allerdings insbesondere vorzugsweise in dem Verteilerkopf angeordnet sein kann, wie es als solches beispielsweise aus der eingangs zitierten IT AN 2013 000030 A1 bekannt ist, so dass er neben der erfindungsgemäßen Funktion einer Massenstromregelung des Dosierorgans auch zur Beaufschlagung des pneumatisch in den Verteilerkopf überführten Verteilgutes mit einer Zentrifugalkraft zu dienen vermag, um die Wirkung der Schwerkraft der Verteilgutpartikel zu verringern und eine homogenere Verteilung des Verteilgutes durch die Anschlüsse des Verteilerkopfes in eine jeweilige Verteilerleitung auch dann gewährleisten kann, wenn einige der Anschlüsse des Verteilerkopfes mittels entsprechender Absperrorgane verschlossen worden sind, um z.B. eine Teilbreitenschaltung der Verteilmaschine zu implementieren.

In konstruktiver Hinsicht kann in letztgenanntem Fall beispielsweise vorgesehen sein, dass der Rotor
- an einem Deckel des Verteilerkopfes; oder
- an einem Boden des Verteilerkopfes
gelagert ist, wobei der Rotorantrieb in beiden Fällen innerhalb oder insbesondere außerhalb des Verteilerkopfes montiert sein kann.

Weitere Merkmale und Vorteile der Erfindung ergeben sich aus der nachfolgenden Beschreibung von Ausführungsbeispielen unter Bezugnahme auf die Zeichnungen. Dabei zeigen:
- Fig. 1: eine stark schematisierte Ansicht einer Ausführungsform einer z.B. nach Art einer Drillmaschine ausgestalteten pneumatischen Verteilmaschine von deren Heck aus betrachtet;
- Fig. 2: eine schematische perspektivische Ansicht einer Ausführungsform des Verteilerkopfes der Verteilmaschine gemäß Fig. 1 einschließlich des Dosierorgans und der Übergabekammer sowie weiterer Komponenten des pneumatischen Fördersystems;
- Fig. 3: eine schematische, teilweise geschnitten dargestellte Detailansicht einer Ausführungsform der Übergabekammer der Verteilmaschine gemäß Fig. 1 und 2, welche zwischen der Düse und dem Diffusor eines Injektors gebildet ist, mit dem oberhalb der Übergabekammer angeordneten Dosierorgan;
- Fig. 4A: eine schematische perspektivische Explosionsansicht einer ersten Ausführungsvariante des Verteilerkopfes mit einem an dessen Deckel gelagerten Rotor zur Massenstromregelung des Dosierorgans und einem außerhalb des Verteilerkopfes montierten Rotorantrieb;
- Fig. 4B: eine schematische Schnittansicht durch den Verteilerkopf gemäß Fig. 4A im Bereich eines elektrischen Rotorantriebs mit einem Drehmomentsensor in Form eines elektrischen Strom- und/oder Spannungssensors;
- Fig. 4C: eine der Fig. 4B entsprechende schematische Schnittansicht durch den Verteilerkopf gemäß Fig. 4A im Bereich des elektrischen Rotorantriebs mit einem Drehmomentsensor in Form eines Magnetostriktionssensors;
- Fig. 5A: eine schematische perspektivische Explosionsansicht einer zweiten Ausführungsvariante des Verteilerkopfes mit einem an dessen Boden gelagerten Rotor zur Massenstromregelung des Dosierorgans und einem innerhalb des Verteilerkopfes montierten Rotorantrieb;
- Fig. 5B: eine schematische Schnittansicht durch den Verteilerkopf gemäß Fig. 5A im Bereich eines elektrischen Rotorantriebs mit einem Drehmomentsensor in Form eines elektrischen Strom- und/oder Spannungssensors;
- Fig. 5C: eine der Fig. 5B entsprechende schematische Schnittansicht durch den Verteilerkopf gemäß Fig. 5A im Bereich des elektrischen Rotorantriebs mit einem Drehmomentsensor in Form eines Magnetostriktionssensors;
- Fig. 5D: eine schematische perspektivische Detailansicht des Verteilerkopfes gemäß Fig. 5A mit demontiertem Rotor von schräg oben betrachtet und bei abgenommenem Deckel des Verteilerkopfes;
- Fig. 6A: eine schematische perspektivische Explosionsansicht einer dritten Ausführungsvariante des Verteilerkopfes mit einem an dessen Boden gelagerten Rotor und einem außerhalb des Verteilerkopfes montierten Rotorantrieb;
- Fig. 6B: eine schematische Schnittansicht durch den Verteilerkopf gemäß Fig. 6A im Bereich eines elektrischen Rotorantriebs mit einem Drehmomentsensor in Form eines elektrischen Strom- und/oder Spannungssensors;
- Fig. 6C: eine der Fig. 6B entsprechende schematische Schnittansicht durch den Verteilerkopf gemäß Fig. 6A im Bereich des elektrischen Rotorantriebs mit einem Drehmomentsensor in Form eines Magnetostriktionssensors;
- Fig. 6D: eine schematische perspektivische Schnittansicht des Verteilerkopfes gemäß Fig. 6A ohne nochmalige Darstellung des Sensors;
- Fig. 6E: eine schematische perspektivische Detailansicht des Rotors des Verteilerkopfes gemäß Fig. 6A bis 6D; und
- Fig. 6F: eine schematische perspektivische Detailansicht des zu Lagerung des Rotors dienenden Bodens des Verteilerkopfes gemäß Fig. 6A bis 6D.

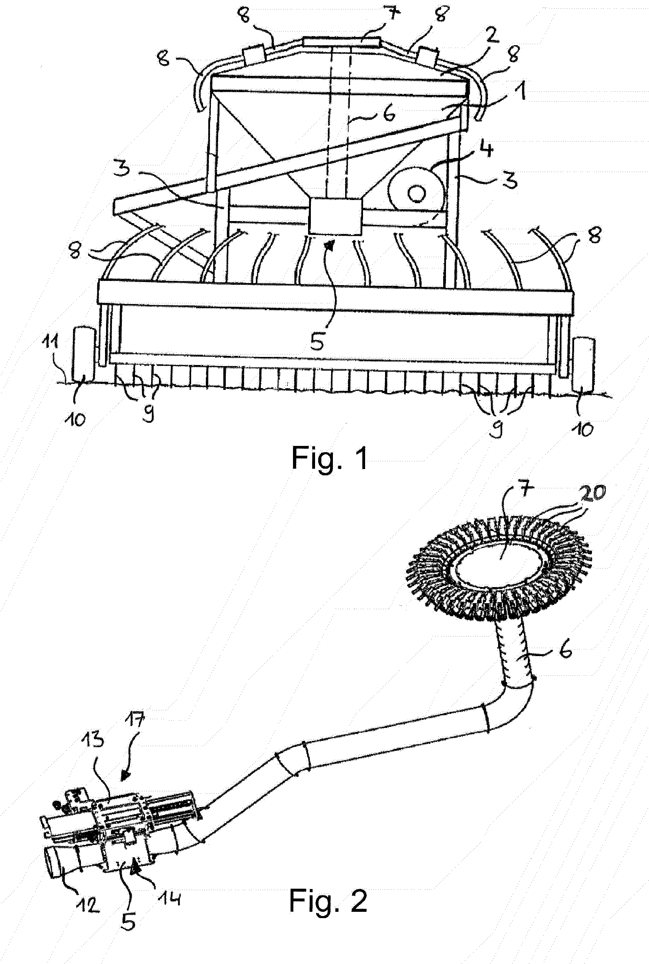

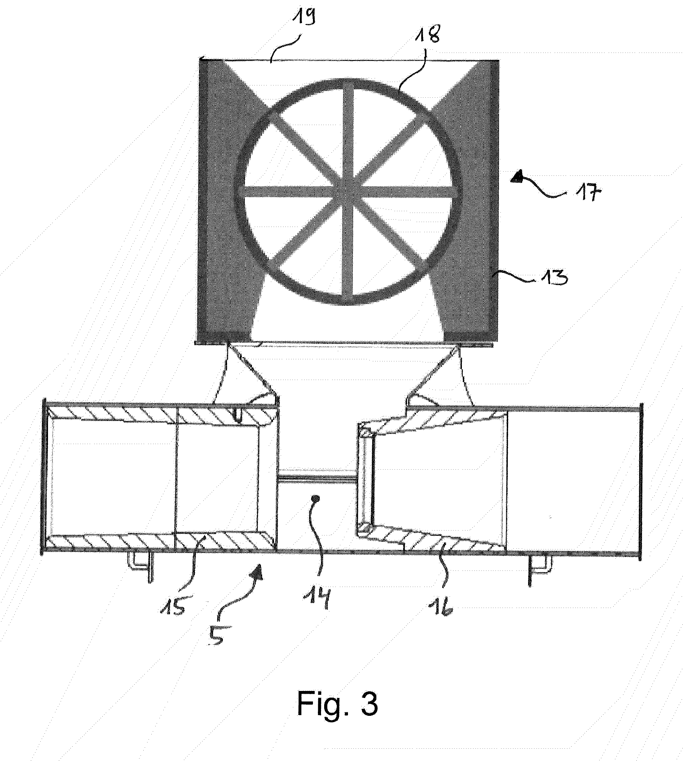

In der Fig. 1 ist ein Ausführungsbeispiel einer pneumatischen Verteilmaschine für landwirtschaftliche Zwecke schematisch wiedergegeben, welche im vorliegenden Fall nach Art einer Sä- oder Drillmaschine ausgestaltet ist und beispielsweise an einem üblichen Dreipunkgestänge einer Zugmaschine, wie eines Traktors, lösbar festgelegt werden kann. Sie umfasst einen Vorratsbehälter 1 zur Aufnahme von Verteilgut, wie z.B. Saatgut und/oder Dünger, mit einer Abdeckung 2, welche an Stützen 3 eines Rahmens getragen sind. An letzterem ist ferner ein Gebläse 4 zur Erzeugung eines Luftstroms festgelegt. Unterhalb einer Auslauföffnung des etwa trichterförmig nach unten zulaufenden Vorratsbehälters 1 befindet sich ein in der Fig. 2 sowie insbesondere in der Fig. 3 besser erkennbares Gehäuse 5 einer Übergabekammer 14, welche zur Überführung des Verteilgutes an eine Förderleitung 6 dient. Letztere ist Teil eines pneumatischen Fördersystems der Verteilmaschine und von dem Gebläse 4 mit einem Luftstrom beaufschlagt, um das Verteilgut pneumatisch nach oben in einen Verteilerkopf 7 des pneumatischen Fördersystems zu fördern. Der Verteilerkopf 7 umfasst eine Mehrzahl an um dessen Umfang verteilt angeordneten, sich im vorliegenden Fall etwa radial nach außen erstreckenden Anschlüssen, an welche je eine Verteilerleitung 8 des pneumatischen Fördersystems angeschlossen ist. Der Anschluss der Verteilerleitungen 8 kann beispielsweise mittels je eines Gehäuses 20 (vgl. die Fig. 2) geschehen, welches zweckmäßigerweise mit je einem Absperrorgan zum bedarfsweisen Unterbrechen des fluidisierten Verteilgutstromes ausgestattet ist, um verschiedene Arbeitsbreiten oder auch Teilbreitenschaltungen vorsehen zu können. Die von dem Verteilerkopf 7 abgehenden Verteilerleitungen 8, welche z.B. nach Art von Schläuchen ausgebildet sein können und in der Fig. 1 aus Übersichtlichkeitsgründen abgebrochen dargestellt sind, sind im Wesentlichen nach unten und hinten geführt, wobei sie an ihren freien, dem Verteilerkopf 7 abgewandten Enden jeweils an einem Verteilorgan münden. Im Falle der in Fig. 1 exemplarisch gezeigten Sämaschine handelt es sich bei diesen Verteilorganen z.B. um nicht im Einzelnen erkennbare Säscharen mit stromab derselben angeordneten Zustreichern 9, sogenannten Striegeln. Der Rahmen der Verteilmaschine kann im Übrigen über Stützräder 10 auf dem Boden 11 abgestützt und insbesondere von diesen angehoben werden.

Die Fig. 2 zeigt die Komponenten des pneumatischen Fördersystems der Verteilmaschine gemäß Fig. 1, welche zur Überführung des Verteilgutes von der im Innern des Gehäuses 5 befindlichen Übergabekammer 14 in den Verteilerkopf 7 mittels der Förderleitung 6 dienen, wobei die an die Gehäuse 20 der Anschlüsse des Verteilerkopfes 7 angeschlossenen Verteilerleitungen 8 (vgl. die Fig. 1) aus Veranschaulichungsgründen nicht nochmals zeichnerisch dargestellt sind. Die Förderleitung 6 weist an ihrem dem Verteilerkopf 7 abgewandten Ende einen Anschlussstutzen 12 zur fluidischen Kontaktierung des Gebläses 4 (vgl. wiederum die Fig. 1) auf, wobei stromab des Anschlussstutzens 12 der Auslass des Dosiergehäuses 13 eines nur in der Fig. 3 erkennbaren und mit dem Bezugszeichen 17 versehenen Dosierorgans in die Übergabekammer 14 einmündet, welche von der Förderleitung 6 durchquert ist. Von dort gelangt das in den Luftstrom eindispergierte Verteilgut zunächst über einen etwa horizontalen Abschnitt der Förderleitung 6 in einen Steigrohrabschnitt derselben, welcher zwecks möglichst gleichmäßiger Verwirbelung des fluidisierten Verteilgutstromes über den Querschnitt der Förderleitung 6 mit Umfangsstrukturen versehen sein kann und von unten etwa in das Zentrum des Verteilerkopfes 7 einmündet, um dessen Umfang herum die radialen Anschlüsse für die Gehäuse 20 angeordnet sind, an welche sich wiederum je eine, in der Fig. 2 nicht nochmals zeichnerisch dargestellte, Verteilerleitung 8 anschließt.

Wie weiterhin der Fig. 2 und insbesondere der Fig. 3 zu entnehmen ist, ist im Innern des Gehäuses 5 der unterhalb des Dosiergehäuses 13 angeordneten Übergabekammer 14, welche im vorliegenden Fall z.B. quer zur Fahrtrichtung von der Förderleitung 6 durchsetzt ist, einerseits eine Düse 15, andererseits ein nach Art einer Expansionsdüse ausgestalteter Diffusor 16 eines Injektors untergebracht, welche koaxial und z.B. am tiefsten Punkt der Verteilmaschine angeordnet sind. Die Übergabekammer 14 befindet sich dabei in dem Zwischenraum zwischen der Düse 15 und dem Diffusor 16 des Injektors. Während die Düse 15 des Injektors an dem in Fig. 2 linken Ende des Gehäuses 5 der Übergabekammer 14 an das Gebläse 4 (siehe Fig. 1) angeschlossen ist, schließt sich an den Diffusor 16 des Injektors an dem in Fig. 2 rechten Ende des Gehäuses 5 der Übergabekammer 14 der in Richtung des Verteilerkopfes 7 führende Abschnitt der Förderleitung 6 an. Auf diese Weise wird das Verteilgut, nachdem es mittels des Dosierorgans 17 in einem gewünschten Massenstrom dosiert worden ist, in der zwischen der Düse 15 und dem Diffusor 16 des Injektors angeordneten Übergabekammer 14 mittels des über die Düse 15 einströmenden Gasstroms in den Diffusor 16 überführt und gelangt von dort in die Förderleitung 6.

Die in den Fig. 1 bis 3 wiedergegebene Verteilmaschine ist darüber hinaus mit einer nicht zeichnerisch dargestellten, in entsprechender Weise programmtechnisch eingerichteten Regeleinrichtung ausgestattet, welche die funktionellen Komponenten der Verteilmaschine, wie insbesondere deren Dosierorgan(e) 17, steuert bzw. regelt und beispielsweise eine Eingabeeinrichtung, z.B. in Form einer Tastatur, eines Touchscreens oder eines beliebigen, vorzugsweise drahtlos mit der Regeleinrichtung kommunizierenden mobilen Endgerätes, wie eines Smartphones, Laptops, Tablet-Computers oder dergleichen (ebenfalls nicht gezeigt), umfasst. Die Eingabeeinrichtung dient insbesondere zur Eingabe eines gewünschten Soll-Massenstromes an Verteilgut als Führungsgrö-ße und/oder zur Eingabe einer oder mehrerer Verteilparameter, wie Soll-Verteilmenge pro Flächeneinheit, Fahrgeschwindigkeit, Arbeitsbreite und dergleichen, aus welchen die Regeleinrichtung den entsprechenden Soll-Massenstrom als Führungsgröße ermittelt, um das Dosierorgan 17 auf den Soll-Massenstrom zu regeln.

Wie des Weiteren aus der Fig. 3 hervorgeht, weist das Dosierorgan 17 ein (oder mehrere; nicht gezeigt) mittels eines mit der Regeleinrichtung verbundenen Dosierantriebs gesteuert bzw. geregelt in Rotation versetzbares Dosierrad 18 auf, welches je nach Art des auszubringenden Verteilguttyps z.B. nach Art eines Zellenrades, aber auch nach Art von Nockenrädern (nicht dargestellt) oder dergleichen ausgestaltet sein kann. Während ein (unterer) Dosierauslass des Dosiergehäuses 13 des Dosierorgans 17 in die Übergabekammer 14 mündet, schließt sich stromauf des Dosierorgans 17 an dessen (oberen) Dosiereinlass die z.B. am unteren Ende des sich etwa trichterförmig nach unten verjüngenden Vorratsbehälters 1 (vgl. die Fig. 1) befindliche Auslassöffnung 19 an, wobei zwischen der Auslassöffnung 19 und dem Dosiereinlass des Dosiergehäuses 13 des Dosierorgans 17 eine Absperreinrichtung, z.B. in Form eines Schiebers (nicht gezeigt) oder dergleichen, vorgesehen sein kann, um die Auslassöffnung 19 bedarfsweise zu verschließen.

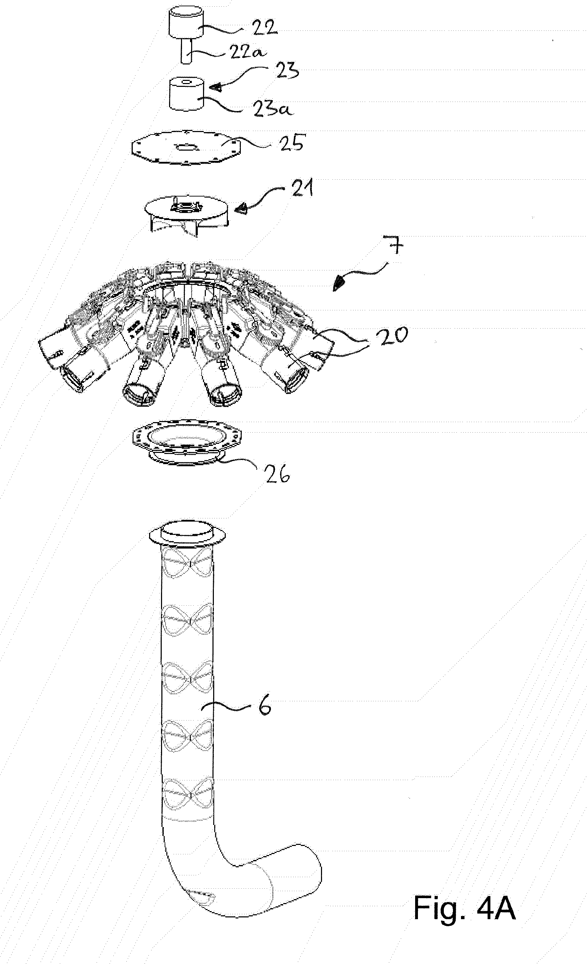

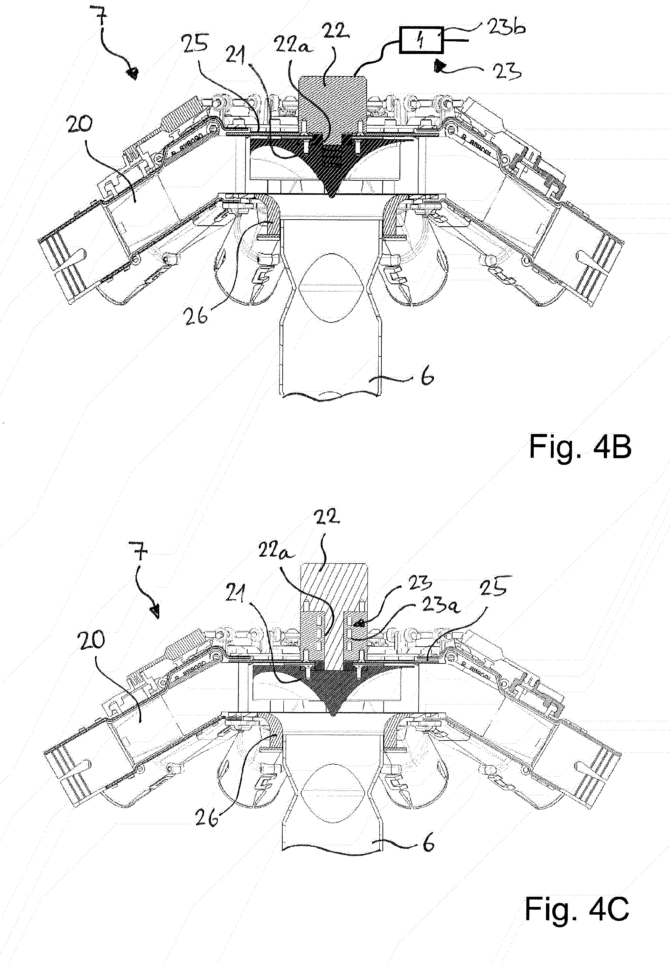

Wie insbesondere den Fig. 4, 5 und 6 zu entnehmen ist, in welchen identische oder funktionsgleiche Komponenten mit denselben Bezugszeichen versehen sind, ist bei den zeichnerisch wiedergegebenen Ausführungsbeispielen in dem Verteilerkopf 7 des pneumatischen Fördersystems der Verteilmaschine ein Rotor 21 drehbar gelagert, dessen Rotorantrieb 22 z.B. gleichfalls mit der Regeleinrichtung in Verbindung steht, um den Rotor 21 mit einer vorgegebenen - und im vorliegenden Fall auch bedarfsweise veränderbaren - Drehzahl in Rotation versetzen zu können. Bei dem Rotorantrieb 22 handelt es sich bei den vorliegenden Ausführungsbeispielen um einen drehzahlgesteuerten bzw. -geregelten elektrischen Rotorantrieb, z.B. in Form eines Servomotors. Dem Rotor 21 ist ein zur berührungsfreien Ermittlung seines für den Ist-Massenstrom an Verteilgut, welches dem Verteilerkopf 7 in fluidisiertem Zustand über den Steigrohrabschnitt der Förderleitung 6 zugeführt wird, repräsentativen Drehmomentes ausgebildeter Sensor 23 zugeordnet, welcher bei den zeichnerisch wiedergegebenen Ausführungsbeispielen jeweils in den Rotorantrieb 22 integriert ist. Der Sensor 23 kann beispielsweise in Form eines Magnetostriktionssensors 23a, wie eines Fluxgate-Magnetometers, ausgestaltet sein und das Drehmoment einer Abtriebswelle 22a des Rotorantriebs 22 oder einer anderen Welle im Antriebstrang des Rotors 21 (nicht gezeigt) erfassen (vgl. insbesondere die Fig. 4A und 4C, 5A und 5C sowie 6A und 6C). Der zur Erfassung des Drehmomentes des Rotors 21 dienende Sensor 23 kann im Falle des zeichnerisch wiedergegebenen elektrischen Rotorantriebe 22 stattdessen z.B. auch in Form eines Strom- und/oder Spannungssensors 23b ausgestaltet sein, welcher gleichfalls in den elektrischen Rotorantrieb (22) integriert ist und die elektrische Stromaufnahme und/oder den elektrischen Spannungsabfall des Rotorantriebs 22 zu erfassen vermag, welche ebenso für das Drehmoment des Rotors 21 repräsentativ ist (vgl. insbesondere die Fig. 4B, 5B und 6B).

Neben dem zur Erfassung des Drehmomentes des Rotors 21 dienenden Sensor 23 ist dem Rotor 21 ferner ein (nicht zeichnerisch gekennzeichneter) Drehzahlsensor zugeordnet, welcher beispielsweise - ebenso wie der Drehmomentsensor 23 - in den Rotorantrieb 22 integriert sein kann, wie es z.B. bei den elektrischen Rotorantrieben 22 in Form von Servomotoren der Fig. 4B, 5B und 6B der Fall sein kann. Im Falle der Magnetostriktionssensoren 23a der Fig. 4A und 4C, 5A und 5C sowie 6A und 6C können diese insbesondere auch zugleich zur Erfassung der Drehzahl des Rotors 21 - oder hier genauer: der den Rotor 21 tragenden Abtriebswelle 22a des Rotorantriebs 22 - ausgebildet sein, wie es weiter oben im Zusammenhang mit den Fluxgate-Magnetometer erläutert ist.

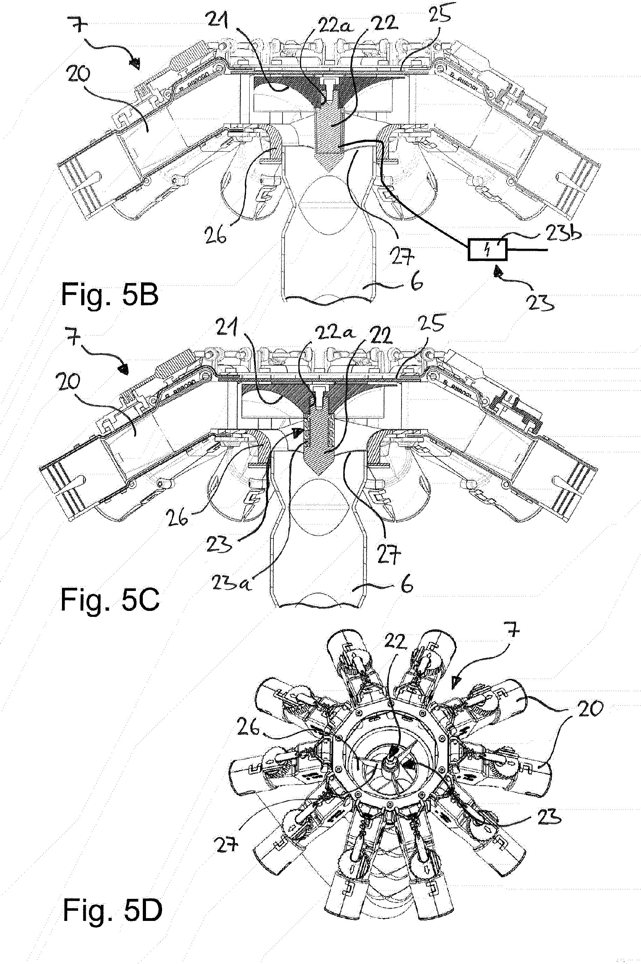

Der
- im Falle der Fig. 4A und 4C, 5A und 5C sowie 6A und 6C sowohl zur Erfassung des Drehmomentes als auch der Drehzahl des Rotors 21 dienende Sensor 23, 23a bzw.
- im Falle der Fig. 4B, 5B und 5D sowohl der zur Erfassung des Drehmomentes des Rotors 21 dienende Sensor 23, 23b als auch der (nicht gezeigte) Drehzahlsensor steht bzw. stehen mit der Regeleinrichtung der pneumatischen Verteilmaschine in Verbindung, wobei in der Regeleinrichtung oder in einer dieser zugeordneten Speichereinrichtung (nicht gezeigt) wenigstens ein funktionaler Zusammenhang zwischen dem Drehmoment des Rotors 21 und dem auf den Rotor 21 auftreffenden Massenstrom an Verteilgut hinterlegt ist. Die Regeleinrichtung ist einerseits zur Ermittlung des Ist-Massenstromes an Verteilgut anhand des als Regelgröße dienenden Drehmomentes des Rotors 21 und des hinterlegten funktionalen Zusammenhangs zwischen dem Drehmoment des Rotors 21 und dem Massenstrom an Verteilgut, andererseits zur Ermittlung der Abweichung des Ist-Massenstromes an Verteilgut von dem Soll-Massenstrom an Verteilgut sowie zur Generierung einer für den Betriebszustand des Dosierorgans 17 (vgl. die Fig. 1 bis 3) repräsentativen Stellgröße ausgebildet ist, um das Dosierorgan 17 auf den Soll-Massenstrom nachzuregeln, sofern diese Abweichung z.B. einen vorgegebenen Toleranz- bzw. Maximalwert überschreitet. Dies geschieht vorzugsweise im Wesentlichen kontinuierlich während des Betriebs der Verteilmaschine bzw. in sehr kurzen Intervallen, so dass die für den Betriebszustand des Dosierorgans 17 repräsentative Stellgröße weitgehend in Echtzeit erzeugt wird und keine auch nur lokal begrenzten Streufehler auftreten. Im vorliegenden Fall geschieht dies ferner in Abhängigkeit weiterer, sich auf das sensorisch ermittelte Drehmoment auswirkender Parameter, wobei die Regeleinrichtung insbesondere zur Generierung der für den Betriebszustand des Dosierorgans 17 repräsentativen Stellgröße in Abhängigkeit der Drehzahl des Rotors 21 sowie gegebenenfalls auch in Abhängigkeit verschiedener Massenströme oder Massenstrombereichen an Verteilgut und/oder in Abhängigkeit verschiedener, mittels des Gebläses 4 erzeugter Förderluftströme oder Förderluftstrombereiche ausgebildet sein kann. Zu diesem Zweck kann beispielsweise vorgesehen sein, dass
- der wenigstens eine funktionale Zusammenhang zwischen dem Drehmoment des Rotors 21 und dem auf den Rotor 21 auftreffenden Massenstrom an Verteilgut wenigstens einen drehzahlabhängigen Faktor sowie gegebenenfalls wenigstens einen massenstrom(bereichs)- und/oder förderluftstrom-(bereichs)abhängigen Faktor aufweist; und/oder
- für eine Mehrzahl an Drehzahlen oder Drehzahlbereichen des Rotors 21 sowie gegebenenfalls für eine Mehrzahl an Massenströmen bzw. Massenstrombereichen und/oder Förderluftströmen bzw. Förderluftstrombereichen eine Mehrzahl an funktionalen Zusammenhängen zwischen dem Drehmoment des Rotors 21 und dem auf den Rotor 21 auftreffenden Massenstrom an Verteilgut in der Regeleinrichtung oder in der dieser zugeordneten Speichereinrichtung abgespeichert sind; und/oder
- für eine Mehrzahl an Drehzahlen oder Drehzahlbereichen des Rotors 21 sowie gegebenenfalls für eine Mehrzahl an Massenströmen bzw. Massenstrombereichen und/oder Förderluftströmen bzw. Förderluftstrombereichen (je) wenigstens ein Korrekturfaktor in der Regeleinrichtung oder in der dieser zugeordneten Speichereinrichtung abgespeichert ist, um welchen der wenigstens eine funktionale Zusammenhang zwischen dem Drehmoment des Rotors 21 und dem auf den Rotor 21 auftreffenden Massenstrom an Verteilgut bei der jeweiligen Drehzahl oder in dem jeweiligen Drehzahlbereich sowie gegebenenfalls bei dem jeweiligen Massenstrom bzw. Massenstrombereich und/oder bei dem jeweiligen Förderluftstrom bzw. Förderluftstrombereich korrigiert wird.

Darüber hinaus kann die pneumatische Verteilmaschine vorzugsweise auch mit wenigstens einem zur Neigung der Verteilmaschine um wenigstens eine horizontale Achse, insbesondere um zwei horizontale Achsen, wie z.B. um zwei etwa senkrecht zueinander angeordnete, horizontale Achsen, vorzugsweise im Wesentlichen in bzw. quer zur Fahrtrichtung der Verteilmaschine, ausgebildeten und ebenfalls mit der Regeleinrichtung in Verbindung stehenden Neigungssensor (nicht zeichnerisch wiedergegeben) ausgestattet sein, wobei die Regeleinrichtung ferner zur Modifizierung des wenigstens einen in der Regeleinrichtung oder in der dieser zugeordneten Speichereinrichtung hinterlegten funktionalen Zusammenhangs zwischen dem Drehmoment des Rotors 21 und dem auf den Rotor 21 auftreffenden Massenstrom an Verteilgut in Abhängigkeit von der Neigung der pneumatischen Verteilmaschine um die wenigstens eine horizontale Achse ausgebildet ist, um die für den Betriebszustand des Dosierorgans 17 repräsentative Stellgröße ferner unter Berücksichtigung der Neigung der pneumatischen Verteilmaschine zu generieren, was wiederum mittels einer Mehrzahl an funktionalen Zusammenhängen, neigungsabhängigen Faktoren, Korrekturfaktoren oder dergleichen geschehen kann, wie es oben in Bezug auf die Drehzahl des Rotors 21 beschrieben ist.

Wie bereits weiter oben unter Bezugnahme auf die Fig. 3 erläutert, handelt es sich bei dem zeichnerisch wiedergegebenen Ausführungsbeispiel um ein Dosierorgan 17, welches wenigstens ein Dosierrad 18 umfasst, das mittels des mit der Regeleinrichtung in Verbindung stehenden und von dieser geregelten Dosierantriebs (nicht gezeigt) drehangetrieben ist, wobei es sich bei dem Dosierantrieb beispielsweise wiederum um einen Elektromotor, z.B. in Form eines Servomotors, handeln kann. Als die für den Betriebszustand des Dosierorgans 17 repräsentative Stellgröße, welche von der Regeleinrichtung generiert wird, handelt es sich in diesem Fall zweckmäßigerweise um die Drehgeschwindigkeit des Dosierantriebs (bzw. des Dosierrades 18 selbst).

Um jegliche Störfaktoren, welche das sensorisch ermittelte Drehmoment des Rotors 21 beeinflussen könnten, in einfacher Weise zu eliminieren, ist die Regeleinrichtung der Verteilmaschine zweckmäßigerweise derart eingerichtet, dass sie das für den Ist-Massenstrom an Verteilgut repräsentative Drehmoment des Rotors 21 einerseits, insbesondere in periodischen Zeitabständen, wie beispielsweise während der Fahrt durch das Vorgewende, im Leerlauf bei geschlossenem Dosierorgan 17 bzw. bei stillstehendem Dosierrad 18 und folglich unbelastetem Rotor 21, andererseits bei Belastung des Rotors 21 mit dem Ist-Massenstrom an Verteilgut sensorisch ermittelt, wobei der im Leerlauf ermittelte Wert von dem unter Last ermittelten Gesamtwert subtrahiert wird, um den nur durch den Ist-Massenstrom an Verteilgut bewirkten Differenzwert zu ermitteln. Dieser Differenzwert wird dann als die für den Ist-Massenstrom an Verteilgut repräsentative Regelgröße herangezogen, um hieraus die für den Betriebszustand - hier: die Drehgeschwindigkeit des Dosierorgans 17 - repräsentative Stellgröße zu generieren und das Dosierorgan 17 auf den Soll-Massenstrom nachzuregeln.

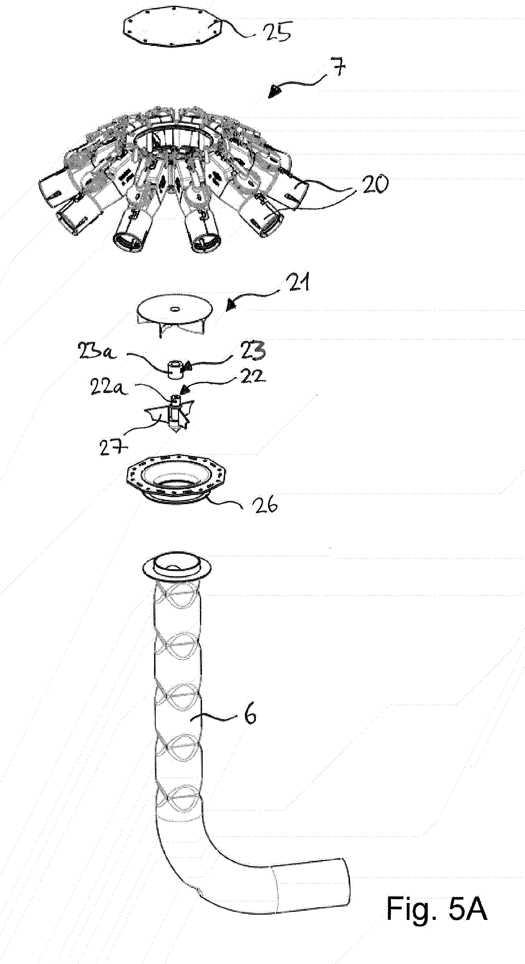

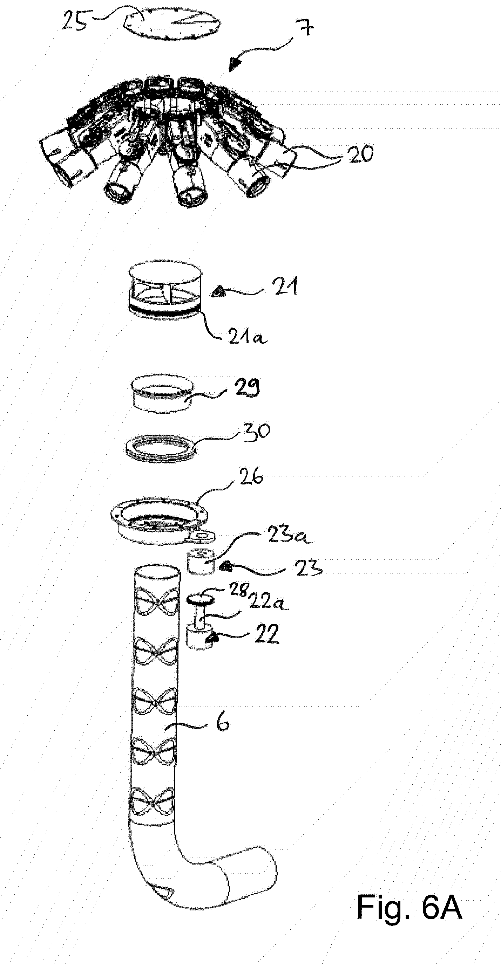

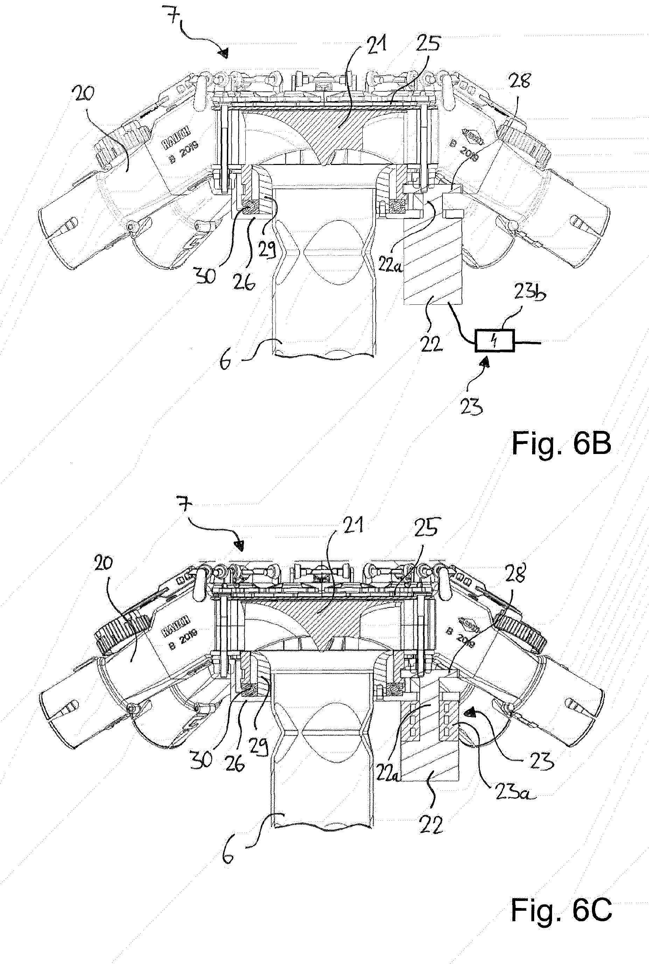

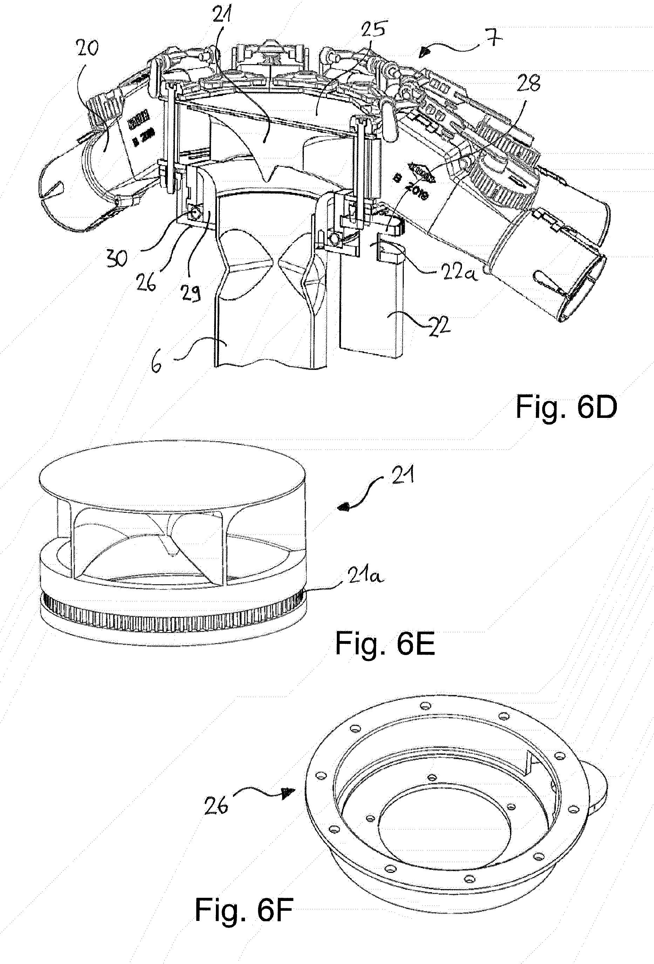

Was die in den Fig. 4, 5 und 6 wiedergegebenen Ausführungsvarianten eines mit einem Rotor 21 ausgestatteten Verteilerkopfes 7 des pneumatischen Fördersystems der Verteilmaschine betrifft, so unterscheiden sich diese vornehmlich in konstruktiver Hinsicht dadurch, dass der Rotor 21 im Falle der Fig. 4 bei außenliegendem Rotortantrieb 22 an einem Deckel 25 des Verteilerkopfes 7 gelagert ist, wohingegen er im Falle der Fig. 5 und 6 an einem Boden 26 des Verteilerkopfes 7 gelagert ist und der Rotorantrieb 22 entweder im Innern des Verteilerkopfes (Fig. 5) oder außerhalb des Verteilerkopfes 7 (Fig. 6) montiert ist.

So ist der Verteilerkopf 8 im Falle der Fig. 4A in als solcher bekannter Weise an einem am Ende des Steigrohrabschnittes der Förderleitung 6 montierten flanschartigen Boden 26 befestigt. Der Rotorantrieb 22 ist auf der äußeren Seite des Deckels 25 des Verteilerkopfes 7 montiert, wobei eine Abtriebswelle 22a des Rotorantriebs 22 den Deckel 25 nach innen durchsetzt und den Rotor 21 trägt. Wie bereits angedeutet, kann der zur Erfassung des Drehmomentes des Rotors 21 bzw. der ihn tragenden Abtriebswelle 22a des Rotorantriebs 22 dienende Sensor 23 im vorliegenden Fall entweder von einem sich um den Umfang der Abtriebswelle 22a herum erstreckenden, berührungsfreien Magnetostriktionssensor 23a (vgl. die Fig. 4A und 4C) oder von einem in den elektrischen Rotorantrieb 22 integrierten Strom- und/oder Spannungssensor 23b (vgl. die Fig. 4B) gebildet sein.

Im Falle der Fig. 5A ist der Rotorantrieb 22, dessen Abtriebswelle 22a wiederum den Rotor 21 trägt, im Innern des Verteilerkopfes 7 montiert, wie beispielsweise über einen etwa sternförmigen Träger 27, dessen Tragarme drehfest an dem flanschartigen Boden 26 montiert sind und eine in Strömungsrichtung des fluidisierten Verteilgutstromes (also in Axialrichtung des Steigrohrabschnittes der Förderleitung 6) sehr kleine Projektionsfläche besitzen (vgl. auch die Fig. 5D). Der zur Erfassung des Drehmomentes des Rotors 21 bzw. der ihn tragenden Abtriebswelle 22a des Rotorantriebs 22 dienende Sensor 23 kann in diesem Fall wiederum z.B. entweder von einem sich um den Umfang der Abtriebswelle 22a herum erstreckenden, berührungsfreien Magnetostriktionssensor 23a (vgl. die Fig. 5A und 5C) oder von einem in den elektrischen Rotorantrieb 22 integrierten Strom- und/oder Spannungssensor 23b (vgl. die Fig. 5B) gebildet sein.

Die Ausführungsvariante der Fig. 6A unterscheidet sich hiervon insbesondere dadurch, dass der Rotorantrieb 22 außerhalb des Verteilerkopfes 7, wie beispielsweise an einem etwa radial nach außen vorstehenden Montagesteg (vgl. auch die Fig. 6F) des Bodens 26 des Verteilerkopfes 7 montiert ist, wobei die Abtriebswelle 22a des Rotorantriebs 22 ein Zahnrad 28 trägt, welches mit einer Außenverzahnung 21a des Rotors 21 im Eingriff steht (vgl. auch die Fig. 6E). Der Rotor 21 selbst ist beispielsweise über einen Lagerring 30, z.B. in Form eines Kugellagers, zwischen dem Boden 26 und einem Diffusorring 29 gelagert. Der zur Erfassung des Drehmomentes des Rotors 21 bzw. der Abtriebswelle 22a des Rotorantriebs 22 dienende Sensor 23 kann wiederum z.B. entweder von einem sich um den Umfang der Abtriebswelle 22a herum erstreckenden, berührungsfreien Magnetostriktionssensor 23a (vgl. die Fig. 6A und 6C) oder von einem in den elektrischen Rotorantrieb 22 integrierten Strom- und/oder Spannungssensor 23b (vgl. die Fig. 6B) gebildet sein.

## Patentansprüche

1. Verfahren zur Regelung des Massenstromes an Verteilgut wenigstens eines regelbaren Dosierorgans (17) einer pneumatischen Verteilmaschine, umfassend:
- wenigstens einen Vorratsbehälter (1) zur Aufnahme von Verteilgut mit wenigstens einer Auslassöffnung (19);
- wenigstens ein der Auslassöffnung (19) des Vorratsbehälters (1) nachgeordnetes Dosierorgan (17);
- eine mit dem Dosierorgan (17) in Verbindung stehende Regeleinrichtung, welche zur Regelung des Dosierorgans (17) auf einen Soll-Massenstrom an Verteilgut in Abhängigkeit wenigstens eines Parameters aus der Gruppe Soll-Verteilmenge pro Flächeneinheit, Fahrgeschwindigkeit und Arbeitsbreite ausgebildet ist;
- wenigstens eine dem Dosierorgan (17) nachgeordnete Übergabekammer (5) zur Überführung von mittels des Dosierorgans (17) dosiertem Verteilgut an wenigstens eine Förderleitung (6) eines pneumatischen Fördersystems, welches zur Überführung des dosierten Verteilgutes an wenigstens ein Verteilorgan ausgebildet ist;
- wenigstens ein Gebläse (4) zur Beaufschlagung der wenigstens einen Förderleitung (6) des pneumatischen Fördersystems mit einem Luftstrom; und
- wenigstens einen in dem pneumatischen Fördersystem angeordneten Rotor (21), welcher mittels eines gesteuerten und/oder geregelten Rotorantriebs (22) drehangetrieben ist,
wobei ein Soll-Massenstrom an Verteilgut der Regeleinrichtung als Führungsgröße eingegeben und/oder von dieser ermittelt wird, um das Dosierorgan (17) auf den Soll-Massenstrom zu regeln, **dadurch gekennzeichnet, dass** als Regelgröße ferner das für den Ist-Massenstrom an Verteilgut repräsentative Drehmoment des wenigstens einen Rotors (21) in dem pneumatischen Fördersystem sensorisch ermittelt, an die Regeleinrichtung übermittelt und hieraus der Ist-Massenstrom an Verteilgut anhand wenigstens eines in der Regeleinrichtung oder in einer dieser zugeordneten Speichereinrichtung hinterlegten funktionalen Zusammenhangs zwischen dem Drehmoment des Rotors (21) und dem auf den Rotor (21) auftreffenden Massenstrom an Verteilgut ermittelt wird, woraufhin die Abweichung des Ist-Massenstromes an Verteilgut von dem Soll-Massenstrom an Verteilgut ermittelt und eine für den Betriebszustand des Dosierorgans (17) repräsentative Stellgröße generiert wird, um das Dosierorgan (17) auf den Soll-Massenstrom nachzuregeln.

2. Verfahren nach Anspruch 1, **dadurch gekennzeichnet, dass** das Dosierorgan (17) wenigstens ein Dosierrad (18) umfasst, welches mittels wenigstens eines mit der Regeleinrichtung in Verbindung stehenden und von dieser geregelten Dosierantriebs (22) drehangetrieben ist, wobei als für den Betriebszustand des Dosierorgans (17) repräsentative Stellgröße die Drehgeschwindigkeit des Dosierantriebs (22) bzw. des Dosierrades (18) generiert wird, um das Dosierorgan (17) auf den Soll-Massenstrom nachzuregeln.

3. Verfahren nach Anspruch 1 oder 2, **dadurch gekennzeichnet, dass** ferner die Drehzahl des Rotors (21)
- sensorisch ermittelt und an die Regeleinrichtung übermittelt; und/oder
- mittels einer Eingabeeinrichtung in die Regeleinrichtung eingegeben wird,
wobei die für den Betriebszustand des Dosierorgans (17) repräsentative Stellgröße ferner in Abhängigkeit der Drehzahl des Rotors (21) generiert wird, wobei insbesondere
- der wenigstens eine funktionale Zusammenhang zwischen dem Drehmoment des Rotors (21) und dem auf den Rotor (21) auftreffenden Massenstrom an Verteilgut wenigstens einen drehzahlabhängigen Faktor aufweist; und/oder
- für eine Mehrzahl an Drehzahlen oder Drehzahlbereichen des Rotors (21) eine Mehrzahl an funktionalen Zusammenhängen zwischen dem Drehmoment des Rotors (21) und dem auf den Rotor (21) auftreffenden Massenstrom an Verteilgut in der Regeleinrichtung oder in der dieser zugeordneten Speichereinrichtung abgespeichert sind; und/oder
- für eine Mehrzahl an Drehzahlen oder Drehzahlbereichen des Rotors (21) wenigstens ein Korrekturfaktor in der Regeleinrichtung oder in der dieser zugeordneten Speichereinrichtung abgespeichert ist, um welchen der wenigstens eine funktionale Zusammenhang zwischen dem Drehmoment des Rotors (21) und dem auf den Rotor (21) auftreffenden Massenstrom an Verteilgut bei der jeweiligen Drehzahl oder in dem jeweiligen Drehzahlbereich korrigiert wird,
um die für den Betriebszustand des Dosierorgans (17) repräsentative Stellgröße unter Berücksichtigung der Drehzahl des Rotors (21) zu generieren.

4. Verfahren nach einem der Ansprüche 1 bis 3, **dadurch gekennzeichnet, dass** für eine Mehrzahl an Massenströmen oder Massenstrombereichen an Verteilgut
- der wenigstens eine funktionale Zusammenhang zwischen dem Drehmoment des Rotors (21) und dem auf den Rotor (21) auftreffenden Massenstrom an Verteilgut wenigstens einen von dem Massenstrom oder von dem Massenstrombereich an Verteilgut abhängigen Faktor aufweist; und/oder
- eine Mehrzahl an funktionalen Zusammenhängen zwischen dem Drehmoment des Rotors (21) und dem jeweiligen auf den Rotor (21) auftreffenden Massenstrom oder Massenstrombereich an Verteilgut in der Regeleinrichtung oder in der dieser zugeordneten Speichereinrichtung abgespeichert sind; und/oder
- wenigstens ein Korrekturfaktor in der Regeleinrichtung oder in der diesem zugeordneten Speichereinrichtung abgespeichert ist, um welchen der wenigstens eine funktionale Zusammenhang zwischen dem Drehmoment des Rotors (21) und dem auf den Rotor (21) auftreffenden Massenstrom an Verteilgut bei dem jeweiligen Massenstrom oder Massenstrombereich an Verteilgut korrigiert wird,
um die für den Betriebszustand des Dosierorgans (17) repräsentative Stellgröße in Abhängigkeit des auf den Rotor (21) auftreffenden Massenstromes an Verteilgut zu generieren.

5. Verfahren nach einem der Ansprüche 1 bis 4, **dadurch gekennzeichnet, dass** das für den Ist-Massenstrom an Verteilgut repräsentative Drehmoment des Rotors dadurch sensorisch ermittelt wird, indem
- die Torsion einer den Rotor tragenden Welle oder einer Welle des Rotorantriebs; und/oder
- die elektrische Stromaufnahme eines elektrischen Rotorantriebs; und/oder
- der elektrische Spannungsabfall eines elektrischen Rotorantriebs; und/oder
- die Druckdifferenz eines hydraulischen Rotorantriebs sensorisch ermittelt wird.

6. Verfahren nach einem der Ansprüche 1 bis 5, **dadurch gekennzeichnet, dass** das für den Ist-Massenstrom an Verteilgut repräsentative Drehmoment des Rotors (21) einerseits, insbesondere in periodischen Zeitabständen, im Leerlauf bei geschlossenem Dosierorgan (17) und folglich unbelastetem Rotor (21), andererseits bei Belastung des Rotors (21) mit dem Ist-Massenstrom an Verteilgut sensorisch ermittelt wird, wobei der im Leerlauf ermittelte Wert von dem unter Last ermittelten Gesamtwert subtrahiert wird, um den nur durch den Ist-Massenstrom an Verteilgut bewirkten Differenzwert zu ermitteln, wobei dieser Differenzwert als die für den Ist-Massenstrom repräsentative Regelgröße verwendet wird, um hieraus die für den Betriebszustand des Dosierorgans (17) repräsentative Stellgröße zu generieren und das Dosierorgan (17) auf den Soll-Massenstrom nachzuregeln.

7. Verfahren nach einem der Ansprüche 1 bis 6, **dadurch gekennzeichnet, dass**
- der wenigstens eine funktionale Zusammenhang zwischen dem Drehmoment des Rotors (21) und dem auf den Rotor (21) auftreffenden Massenstrom an Verteilgut wenigstens einen von dem Förderluftstrom oder von Förderluftstrombereichen des Gebläses (4) abhängigen Faktor aufweist; und/oder
- für eine Mehrzahl an Förderluftströmen oder Förderluftstrombereichen des Gebläses (4) eine Mehrzahl an funktionalen Zusammenhängen zwischen dem Drehmoment des Rotors (21) und dem auf den Rotor (21) auftreffenden Massenstrom an Verteilgut in der Regeleinrichtung oder in der dieser zugeordneten Speichereinrichtung abgespeichert sind; und/oder
- für eine Mehrzahl an Förderluftströmen oder Förderluftstrombereichen des Gebläses (4) wenigstens ein Korrekturfaktor in der Regeleinrichtung oder in der dieser zugeordneten Speichereinrichtung abgespeichert ist, um welchen der wenigstens eine funktionale Zusammenhang zwischen dem Drehmoment des Rotors (21) und dem auf den Rotor (21) auftreffenden Massenstrom an Verteilgut bei dem jeweiligen Förderluftstrom oder Förderluftstrombereich des Gebläses (4) korrigiert wird,
um die für den Betriebszustand des Dosierorgans (17) repräsentative Stellgröße unter Berücksichtigung des Förderluftstromes des Gebläses (4) zu generieren.

8. Verfahren nach einem der Ansprüche 1 bis 7, **dadurch gekennzeichnet, dass** zur Regelung des Ist-Massenstromes an Verteilgut
- von wenigstens zwei unabhängig voneinander regelbaren Dosierorganen (17); und/oder
- von wenigstens zwei unabhängig voneinander regelbaren Dosierradsegmenten eines Dosierrades (18) des Dosierorgans (17)
der pneumatischen Verteilmaschine der Soll-Massenstrom an Verteilgut
- eines jeweiligen Dosierorgans (17); und/oder
- eines jeweiligen Dosierradsegmentes des Dosierrades (18) des Dosierorgans (17)
der Regeleinrichtung als Führungsgröße eingegeben wird, wobei ferner als Regelgröße das für den Ist-Massenstrom repräsentative Drehmoment
- je eines, dem jeweiligen Dosierorgan (17) zugeordneten Rotors (21); und/oder
- je eines, dem jeweiligen Dosierradsegment des Dosierrades (18) des Dosierorgans (17) zugeordneten Rotors (21)
in dem pneumatischen Fördersystem unabhängig voneinander sensorisch ermittelt, an das Regelgerät übermittelt und hieraus jeweils der Ist-Massenstrom an Verteilgut anhand des wenigstens einen in der Regeleinrichtung oder in der dieser zugeordneten Speichereinrichtung hinterlegten funktionalen Zusammenhangs zwischen dem Drehmoment des jeweiligen Rotors (21) und dem auf den jeweiligen Rotor (21) auftreffenden Massenstrom an Verteilgut unabhängig voneinander ermittelt wird, woraufhin die Abweichung des Ist-Massenstromes an Verteilgut von dem Soll-Massenstrom an Verteilgut
- für jedes Dosierorgan (17); und/oder
- für jedes Dosierradsegment des Dosierrades (18) des Dosierorgans (17)
ermittelt und je eine für den Betriebszustand
- des jeweiligen Dosierorgans (17); und/oder
- des jeweiligen Dosierradsegmentes des Dosierrades (18) des Dosierorgans (17)
repräsentative Stellgröße generiert wird, um
- das jeweilige Dosierorgan (17) ; und/oder
- das jeweilige Dosierradsegment des Dosierrades (18) des Dosierorgans (17)
auf den Soll-Massenstrom nachzuregeln.

9. Verfahren nach einem der Ansprüche 1 bis 8, **dadurch gekennzeichnet, dass** ferner wenigstens eine Neigung der pneumatischen Verteilmaschine um wenigstens eine horizontale Achse, insbesondere um zwei horizontale Achsen, ermittelt und an die Regeleinrichtung übermittelt wird, wobei der wenigstens eine in der Regeleinrichtung oder in der dieser zugeordneten Speichereinrichtung hinterlegte funktionale Zusammenhang zwischen dem Drehmoment des Rotors (21) und dem auf den Rotor (21) auftreffenden Massenstrom an Verteilgut in Abhängigkeit von der Neigung der pneumatischen Verteilmaschine um die wenigstens eine horizontale Achse modifiziert wird, um die für den Betriebszustand des Dosierorgans (17) repräsentative Stellgröße unter Berücksichtigung der Neigung der pneumatischen Verteilmaschine zu generieren.

10. Pneumatischen Verteilmaschine, insbesondere aus der Gruppe pneumatischer Düngerstreuer, pneumatische Sämaschine und Drillmaschine, umfassend:
- wenigstens einen Vorratsbehälter (1) zur Aufnahme von Verteilgut mit wenigstens einer Auslassöffnung (19);
- wenigstens ein der Auslassöffnung (19) des Vorratsbehälters (1) nachgeordnetes Dosierorgan (17);
- eine mit dem Dosierorgan (17) in Verbindung stehende Regeleinrichtung, welche zur Regelung des Dosierorgans (17) auf einen Soll-Massenstrom an Verteilgut in Abhängigkeit wenigstens eines Parameters aus der Gruppe Soll-Verteilmenge pro Flächeneinheit, Fahrgeschwindigkeit und Arbeitsbreite ausgebildet ist;
- wenigstens eine dem Dosierorgan (17) nachgeordnete Übergabekammer (5) zur Überführung von mittels des Dosierorgans (17) dosiertem Verteilgut an wenigstens eine Förderleitung (6) eines pneumatischen Fördersystems, welches zur Überführung des dosierten Verteilgutes an wenigstens ein Verteilorgan ausgebildet ist;
- wenigstens ein Gebläse (4) zur Beaufschlagung der wenigstens einen Förderleitung (6) des pneumatischen Fördersystems mit einem Luftstrom; und
- wenigstens einen in dem pneumatischen Fördersystem angeordneten Rotor (21), welcher mittels eines gesteuerten und/oder geregelten Rotorantriebs (22) drehangetrieben ist,
wobei die Regeleinrichtung zur Eingabe und/oder Ermittlung eines Soll-Massenstromes an Verteilgut als Führungsgröße ausgebildet ist, um das Dosierorgan (17) auf den Soll-Massenstrom zu regeln, **dadurch gekennzeichnet, dass** dem wenigstens einen Rotor (21) in dem pneumatischen Fördersystem ein zur Ermittlung seines für den Ist-Massenstrom an Verteilgut repräsentativen Drehmomentes ausgebildeter und mit der Regeleinrichtung in Verbindung stehender Sensor (23) zugeordnet ist, dass in der Regeleinrichtung oder in einer dieser zugeordneten Speichereinrichtung wenigstens ein funktionaler Zusammenhang zwischen dem Drehmoment des Rotors (21) und dem auf den Rotor (21) auftreffenden Massenstrom an Verteilgut hinterlegt ist, und dass die Regeleinrichtung zur Ermittlung des Ist-Massenstromes an Verteilgut anhand des als Regelgröße dienenden Drehmomentes des Rotors (21) und des hinterlegten funktionalen Zusammenhangs zwischen dem Drehmoment des Rotors (21) und dem Massenstrom an Verteilgut ausgebildet ist, wobei die Regeleinrichtung ferner zur Ermittlung der Abweichung des Ist-Massenstromes an Verteilgut von dem Soll-Massenstrom an Verteilgut sowie zur Generierung einer für den Betriebszustand des Dosierorgans (17) repräsentativen Stellgröße ausgebildet ist, um das Dosierorgan (17) auf den Soll-Massenstrom nachzuregeln.

11. Verteilmaschine nach Anspruch 10, **dadurch gekennzeichnet, dass** das Dosierorgan (17) wenigstens ein Dosierrad (18) umfasst, welches mittels wenigstens eines mit der Regeleinrichtung in Verbindung stehenden und von dieser geregelten Dosierantriebs (22) drehangetrieben ist, wobei die Regeleinrichtung zur Generierung einer Drehgeschwindigkeit des Dosierantriebs (22) als für den Betriebszustand des Dosierorgans (17) repräsentative Stellgröße ausgebildet ist, um das Dosierorgan (17) auf den Soll-Massenstrom nachzuregeln.

12. Verteilmaschine nach Anspruch 10 oder 11, **dadurch gekennzeichnet, dass** sie ferner
- einen dem Rotor (21) zugeordneten und mit der Regeleinrichtung in Verbindung stehenden Drehzahlsensor aufweist oder der zur Ermittlung des für den Ist-Massenstrom an Verteilgut repräsentativen Drehmomentes ausgebildete und mit der Regeleinrichtung in Verbindung stehende Sensor (23) ferner zur Erfassung der Drehzahl des Rotors (21) ausgebildet ist; und/oder
- eine der Regeleinrichtung zugeordnete Eingabeeinrichtung aufweist, welche zur Eingabe einer Drehzahl des Rotors (21) ausgebildet ist,
wobei die Regeleinrichtung ferner zur Generierung der für den Betriebszustand des Dosierorgans (17) repräsentativen Stellgröße in Abhängigkeit von der Drehzahl des Rotors (21) ausgebildet ist.

13. Verteilmaschine nach einem der Ansprüche 10 bis 12, **dadurch gekennzeichnet, dass** es sich bei dem zur Ermittlung des für den Ist-Massenstrom an Verteilgut repräsentativen Drehmomentes ausgebildeten Sensor (23)
- um einen zur berührungsfreien Ermittlung der Torsion einer den Rotor tragenden Welle oder einer Welle des Rotorantriebs ausgebildeten Sensor (23a), insbesondere in Form eines Magnetostriktionssensors, wie eines Fluxgate-Magnetometers; und/oder
- um einen zur Ermittlung der elektrischen Stromaufnahme eines elektrischen Rotorantriebs (22) ausgebildeten Stromsensor (23b); und/oder
- um einen zur Ermittlung des elektrischen Spannungsabfalls eines elektrischen Rotorantriebs (22) ausgebildeten Spannungssensor (23b); und/oder
- um einen zur Ermittlung der Druckdifferenz eines hydraulischen Rotorantriebs (22) ausgebildeten Drucksensor
handelt.

14. Verteilmaschine nach einem der Ansprüche 10 bis 13, **dadurch gekennzeichnet, dass** sie einerseits
- wenigstens zwei unabhängig voneinander regelbare Dosierorgane (17); und/oder
- ein Dosierorgan (17) in Form eines Dosierrades (18) mit wenigstens zwei unabhängig voneinander regelbaren Dosierradsegmenten aufweist,
andererseits
- je einen, dem jeweiligen Dosierorgan (17) zugeordneten Rotor (21); und/oder
- je einen, dem jeweiligen Dosierradsegment des Dosierrades (18) des Dosierorgans (17) zugeordneten Rotor (21)
in dem pneumatischen Fördersystem aufweist, wobei einem jeweiligen Rotor (21) je ein zur Ermittlung seines für den Ist-Massenstrom an Verteilgut repräsentativen Drehmomentes ausgebildeter und mit der Regeleinrichtung in Verbindung stehender Sensor (23) zugeordnet ist, wobei die Regeleinrichtung zur Ermittlung des Ist-Massenstromes an Verteilgut
- eines jeweiligen Dosierorgans (17); und/oder
- eines jeweiligen Dosierradsegmentes des Dosierrades (18) des Dosierorgans (17)
anhand des als Regelgröße dienenden Drehmomentes des jeweiligen Rotors (21) und des hinterlegten funktionalen Zusammenhangs zwischen dem Drehmoment des jeweiligen Rotors (21) und dem Massenstrom an Verteilgut ausgebildet ist, wobei die Regeleinrichtung ferner zur Ermittlung der Abweichung des Ist-Massenstromes an Verteilgut von dem Soll-Massenstrom an Verteilgut sowie zur Generierung einer für den Betriebszustand
- eines jeweiligen Dosierorgans (17); und/oder
- eines jeweiligen Dosierradsegmentes des Dosierrades (18) des Dosierorgans (17)
repräsentativen Stellgröße ausgebildet ist, um
- ein jeweiliges Dosierorgan (17); und/oder
- ein jeweiliges Dosierradsegment des Dosierrades (18) des Dosierorgans (17)
auf den Soll-Massenstrom nachzuregeln.

15. Verteilmaschine nach einem der Ansprüche 10 bis 14, **dadurch gekennzeichnet, dass** sie ferner wenigstens einen zur Neigung der pneumatischen Verteilmaschine um wenigstens eine horizontale Achse, insbesondere um zwei horizontale Achsen, ausgebildeten und mit der Regeleinrichtung in Verbindung stehenden Neigungssensor aufweist, wobei die Regeleinrichtung ferner zur Modifizierung des wenigstens einen in der Regeleinrichtung oder in der dieser zugeordneten Speichereinrichtung hinterlegten funktionalen Zusammenhangs zwischen dem Drehmoment des Rotors (21) und dem auf den Rotor (21) auftreffenden Massenstrom an Verteilgut in Abhängigkeit von der Neigung der pneumatischen Verteilmaschine um die wenigstens eine horizontale Achse ausgebildet ist, um die für den Betriebszustand des Dosierorgans (17) repräsentative Stellgröße unter Berücksichtigung der Neigung der pneumatischen Verteilmaschine zu generieren.

16. Verteilmaschine nach einem der Ansprüche 10 bis 15, **dadurch gekennzeichnet, dass** ihr pneumatisches Fördersystem eine Mehrzahl an Förderleitungen (6) aufweist, welche von einer jeweiligen Übergabekammer (14) in Richtung je eines Verteilorgans der Verteilmaschine führen, wobei der wenigstens eine Rotor (21) in zumindest einer der Förderleitungen (6) angeordnet ist, wobei insbesondere
- alle Förderleitungen (6) mit je einem Rotor (21) mit je einem individuellen Rotorantrieb (22) versehen sind, um ein jeweiliges Dosierorgan (17) und/oder ein jeweiliges Dosierradsegment des Dosierrades (18) eines jeweiligen Dosierorgans (17) individuell auf den Soll-Massenstrom an Verteilgut zu regeln; oder
- nur eine oder einige Förderleitung(en) (6) mit (je) einem Rotor (21) mit je einem individuellen Rotorantrieb (22) versehen ist bzw. sind, wobei die Regeleinrichtung die Dosierorgane (17) und/oder die Dosierradsegmente des Dosierrades (18) eines jeweiligen Dosierorgans (17), deren ihnen zugeordnete Förderleitung (6) nicht mit einem Rotor (21) versehen ist, mit einer entsprechenden, für ihren Betriebszustand repräsentativen Stellgröße versorgt.

17. Verteilmaschine nach einem der Ansprüche 10 bis 15, **dadurch gekennzeichnet, dass** ihr pneumatisches Fördersystem wenigstens einen Verteilerkopf (7) umfasst, in welchen wenigstens eine Förderleitung (6) von wenigstens einer Übergabekammer (14) einmündet und welcher eine Mehrzahl an, insbesondere um seinen Umfang verteilt angeordneten, Anschlüssen aufweist, an welche sich je eine, an einem jeweiligen Verteilorgan mündende Verteilerleitung (8) anschließt, wobei der wenigstens eine Rotor (21) in dem Verteilerkopf (7) angeordnet ist und insbesondere
- an einem Deckel (25) des Verteilerkopfes (7); oder
- an einem Boden (26) des Verteilerkopfes (7) gelagert ist.
